Europäisches Patentamt

European Patent Office

Office européen des brevets

(11) Publication number: **0 105 339**
**B1**

(12) **EUROPEAN PATENT SPECIFICATION**

(45) Date of publication of patent specification: **28.11.90**

(51) Int. Cl.⁵: **C 02 F 3/08**

(21) Application number: **83901514.6**

(22) Date of filing: **28.03.83**

(86) International application number:
**PCT/US83/00425**

(87) International publication number:
**WO 83/03408 13.10.83 Gazette 83/24**

(54) **SYSTEM OF IONIZED OXYGEN ALLOTROPE GAS WATER PURIFICATION AND METHOD AND APPARATUS THEREFOR.**

(30) Priority: **01.04.82 US 363254**
**05.08.82 US 403801**

(43) Date of publication of application:
**18.04.84 Bulletin 84/16**

(45) Publication of the grant of the patent:
**28.11.90 Bulletin 90/48**

(84) Designated Contracting States:
**AT BE CH DE FR GB LI LU NL SE**

(56) References cited:
**FR-A-2 322 830**
**US-A-3 186 929**
**US-A-4 179 616**
**US-A-4 214 962**
**US-A-4 229 389**
**US-A-4 230 571**
**US-A-4 255 257**

(73) Proprietor: **JOHNSON, Dennis E. J.**
**1025 Garfield Avenue**
**Aurora, IL 60506 (US)**

(73) Proprietor: **JOHNSON, Scott J.**
**1025 Garfield Avenue**
**Aurora IL 60506 (US)**

(72) Inventor: **JOHNSON, Dennis E. J.**
**1025 Garfield Avenue**
**Aurora, IL 60506 (US)**
Inventor: **JOHNSON, Scott J.**
**1025 Garfield Avenue**
**Aurora IL 60506 (US)**

(74) Representative: **Santarelli, Marc et al**
**Cabinet Rinuy et Santarelli 14, avenue de la**
**Grande Armée**
**F-75017 Paris (FR)**

Courier Press, Leamington Spa, England.

## Description

This invention relates to a system of ionized oxygen allotrope gas water purification and method and apparatus therefor, and more particularly, a system of, and a method and apparatus therefor, treating water, as for detoxification and general purification purposes, in which the treating agent employed is atmospheric oxygen in the ambient air. More specifically, a basic feature of the invention is to continuously draw an ambient air flow into the system and process same, to concurrently energy transform and ionize the atmospheric oxygen therein to form stable and highly energized oxygen allottrope ions in oxidant gaseous form that are conveyed to and continuously applied to the water being treated by interspersing the air flow involved therein, for elimination by oxidation of the contaminants and other undesirable materials contained in same, by the oxygen allotrope ions; with the remaining compounds of the air returning harmlessly to the atmosphere.

Aside from water purification systems of the filtration and/or integrated ion exchange membrane process type, the vast majority of water purification technology utilized at the present time is concerned with a broad application spectrum of a wide variety of chemical additive type water treatment processes, a number of which are oxidizing agents, as distinguished from oxygen or its allotropes, and all of which are not available from the ambient air or natural locale of the water to be treated. Traditional chemical treatment of water has involved a wide variety of industrially formulated chemical substances for disinfection, descaling, detoxification, sterilization, flocculation, or anticoagulation and applications or purposes. Purification chemicals commonly may take any one of the three physical states, solids, liquids or gases, and range from complex chemical formulations to highly active elemental substances, such as the halogens. These various chemical compounds or substances for water purification purposes have dramatic chemical structural differences one from another, depending on whether they are categorized, as, for instance, biocides, algacides, fungicides, scale inhibitors, descalers, de-emulsifiers, coagulants, coalescents, flocculants, de-toxicants, surfactants, disinfectants, etc. The material of each such category is also subdivided into several sub-groups with regard to individual chemical strength and reactive oxidizing potentials per solubility limits for chemical water saturation.

In any event, the basic inherent problems associated with water treatment using formulated chemicals has been historically one of "too little or too much". Further, the solubility and reactivity of the chemical additive often changes with water temperature changes; reactivity may be further affected by minor water chemistry natural shifts in acidity-alkalinity values as well as by chemical additive neutralization interreaction with other foreign contaminant chemical substances.

Furthermore, it is all too common place that the chemical treatment additive prescribed for a particular problem will have an adverse reaction and be incompatible with other chemical treatment additives or even some of the contaminants in the water system, resulting in no real benefit and often having some deleterious affect on water quality, as well as the possibility of adversely affecting the health of the users of the water.

It is well recognized that the treatment of water with chemicals for purification and related purposes, while widely employed for this purpose in quite a number of different applications, is well known to be an inexact science, with the chemicals themselves often being questioned as the possible source of health problems, such as the causing of cancer, and the like.

On the other hand, water treatment systems that do not involve the addition or use of chemicals as such, but rather employ gaseous ozone obtained from the ambient air, which are of the so-called non-chemical type, have experienced only modest success and acceptance. While the injection of gaseous ozone in neutral molecular form into public drinking water supplies for the purpose of disinfection has been an acceptable practice in Europe since the turn of the Century, and on account of the recognized oxidizing activity of neutral ozone gas, increasing number of applications of it have been made, wider use for all applications has been prevented because of the expense of ozone production, particularly in large volumes. Conventionally large volume ozone gas production is accomplished by employing expensive high voltage electric discharge equipment, such as 10,000 volt corona discharge generators, in which atmospheric oxygen is converted into neutral ozone gas molecules within an intense electrical discharge electromagnetic arc zone. Corona generators are known to have excessive power consumption requirements; further, the maintenance requirements of this type of equipment are excessive in that constant repair service is required on the anode-cathode electrodes along with constant services of the dehumidifying air dryer and disicating units. Also, large municipal and industrial ozone systems require additional costly cooling tower equipment to relieve generated heat. While small wall hung type corona discharge ozone generating devices have been available since about 1950, their known technical limitations represent real safety concerns due to the relatively high voltage requirements for the generator and the close proximity to the water that is required for the generator. Even in the smaller corona units, high maintenance requirements for the electrode and air drying modules are a continuing problem.

Nevertheless, as neutral ozone is known to be a strong and rapid oxidizing agent, its consideration for use in purification of municipal water supplies of water has continued. Neutral ozone, however, for rapid purification purposes, requires the delivery of large quantities of the gas for application to the water supply, which, of course, involves large capital expenditures. While the long popular water treating chemical chlorine is now suspected by some knowledgeable authorities as being a contributing chemical source of cancer, neutral ozone gas is simple oxygen in allotrope form and is known to be completely safe in drinking water, and consequently non chemical gaseous ozone treatment has commended itself to the Applicant as being worthy of full development and perfection to replace the problem fraught formulated chemical additive approach.

Another non-chemical method and means for purification of water is disclosed by FR-A-2,322,830 in which a grounded electrode extends through an ionization chamber (formed from a non-metallic material), in which the grounded electrode is in close association with a corona discharge provided by high voltage electrically charged electrode tips being directed at the grounded electrode, with the corona discharge being exposed to a compressed air flow through the chamber along the grounded electrode that directs the resulting air-air ion mixture into a pipe through which flows water to be degermed, with the air-air ion mixture being finely distributed in bubble form into such water.

A principal object of the present invention is to provide an ambient air source oxidizing agent providing a system of water purification and method and apparatus therefor utilizing as the treatment agent atmospheric oxygen that may be obtained from the ambient air, simply treated by inexpensive energy efficient equipment and procedures that induce an ambient air inflow into the system and transform the atmospheric oxygen of such air flow into ionized oxygen allotropes of high energy content, as distinguished from neutral ozone, and which supplies the air flow, including the ionized oxygen allotropes in oxidant gas form, to the water, and on a constant application basis and in the quantities needed to effect beneficial oxidant treatment of the water by the ionized oxygen allotropes for all purposes that can be achieved using traditional formulated chemical treatment approaches, including removal of contaminants and other foreign materials.

Another important object of the invention is to provide a simple low cost, highly efficient ionized oxygen allotrope or oxidant gas, generator and method of generating ionized oxygen allotrope in gaseous form, which uses ambient air as the raw material for the generator, which has no need for formulated chemicals and has dramatically low power requirements while providing the needed capacity on a continual operating basis for large scale water treatment purposes.

Still another important object of the invention is to provide a system of water treatment for purification and related purposes, and method and apparatus therefore, in which the real potential of ozone and other oxidizing oxygen allotropes for this purpose is achieved while at the same time providing water treatment alternates to traditional chemical purification systems that avoid the practical problems presented by the presence of chemical additives in water, whether the chemical be one of the halogens, such as chlorine, or otherwise.

Still another important object of the invention is to provide a system of water treatment for purification and method and apparatus therefor that is readily adapted for serving a wide variety of industrial and commercial water purification purposes, in addition to purification and sterilization of drinking water, as for instance, descaling of boiler and cooling tower recirculating water systems, bacteria and fungus disinfection of industrial machine tool coolant waters; decontamination and/or agglomeration of solids in industrial water filtration process systems, decontamination of toxic organics from industrial process waters and some oils, disinfection and purification of ground water and rain run off water for human intake purposes.

Yet further objects of the invention are to provide simplified methods and equipment for water treatment purposes whereby the ionized oxygen allotrope gas acts as the sole water treating agent, and is drawn as part of an ambient air flow from the ambient atmosphere and is interspersed into the water by simplified equipment that is inexpensive to manufacture and install, easily operated by even the most inexperienced persons, and that is long lived and effective in use for a wide variety of purposes.

In accordance with the invention, a system of ionized oxygen allotrope gas water purification is provided which involves two basic pieces of equipment, namely a generator for transforming atmospheric oxygen contained in an ambient air inflow to ionized oxygen allotropes, in gaseous form, and a gas diffuser to which such air inflow that includes the oxygen allotropes in gaseous, ionized form (which air flow is hereinafter sometimes referred to as "oxidant gas") is supplied and diffused into the water or other liquid to be purified for bringing the oxygen allotrope ions of the oxidant gas into dispersed working with undesirable impurities and contaminants. The generator is in the form of a housing defining a fluid flow chamber formed by a non-magnetic material that defines an ambient air flow way or path having an oxygen allotrope forming site through which the ambient air is passed for purposes of transforming the atmospheric oxygen thereof to highly energized or activated oxygen allotrope gas in ionic form, to the exclusion of having any significant effect on nitrogen and other components of the ambient air intake of the generator.

The generator oxygen transforming converting site includes both permanent magnetic flux disposing and oxygen photolysis activation radiant energy emitting devices that operate in an intermeshed manner to concurrently transform atmospheric oxygen, which is known to be highly paramagnetic in character, into oxidizing oxygen allotropes that are both stable and ionized in character. The invention contemplates that at the ionized oxygen allotrope forming site, the magnetic flux is in the form of permanent magnet induced, multiple magnetic flux fields of which the magnetic lines of flux involved are disposed within the interlace the ambient air flow path defined by the generator. In a preferred form, the magnetic arrangement is characterized by being in the form of spaced rows of alternately polar rod type permanent magnet type, flux field forming magnetic structures disposed to place the flux in flux attracting relation longitudinally and crosswise of the magnet entity forming rows, and an elongate ultraviolet wave length activation energy electron-volt emission source, in the form of a low pressure (low energy requirement) mercury vapor photolysis lamp, disposed in the ambient air flow path and relative to the magnetic flux fields so that photolysis lamp electron-volt emissions envelop the flux of the air flow way or path. The ambient air flow way defined by the generator has an ambient air inlet upstream of the generator oxygen converting site, and an outlet downstream of such site; the generator at the indicated alternate polarity permanent magnet force fields that are inundated by the indicated electronvolt energy emissions through which the air passing through the generator moves. At such oxygen transforming site, the atmospheric oxygen is transformed or energy stepped up into high energy level oxygen allotrope ions by a composite action on the oxygen in which the atmospheric oxygen molecules are magnetically deflected, retained, and concentrated toward and impact against the multiple lines of the permanent magnetic flux fields involved, while at the same time such oxygen molecules are being subjected to photons of electronvolt bombardment by low pressure mercury lamp photolysis ionizing energy emissions involved, whereby the atmospheric oxygen is transformed into stable and highly energized and reactive oxygen allotrope gas in ionized form believed to comprise ionized ozone and singlet molecular oxygen ions as distinguished from neutral ozone. The remainder of the air passing through the generator site in question is unaffected including atmospheric nitrogen.

The air containing the thus transformed atmospheric oxygen, now ionized oxygen allotropes of the type indicated, is passed as the aforementioned oxidant gas from the generator to the location of the water to be treated, using suitable conduiting where the gaseous flow involved is interspersed into the water, preferably by way of diffusion or other similar techniques. The application to the water may be ordinarily by way of insertion of the oxidant gas in a water conduit or pipe which conveys the water, for instance, from a suitable filter back to the main body of water, whereby after a period of time of continuous operation, the oxidant being treated. Water being dipolic in nature, the water presents a naturally occurring magnetic and electrochemical attraction to the oxidant gases inserted therein, as represented by the indicated oxygen allotropes in ionic form, and this natural attraction results in the highest levels of the ionic oxygen allotropes involved being held in saturation in the water regardless of ambient temperature and pressure changes. The natural chemical attraction of the oxygen allotrope ions to the contaminants contained within the water and their oxidation thereby, is stronger than the attraction of such ions to the molecular water involved, with the result that ideal water treatment, such as, purification, descaling, etc. is promptly achieved even though the flow and diffusion rates of the air flow into the water are at relatively low volume per unit of time rates.

The arrangement disclosed in FR-A-2,322,830 does not solve the technical advantage provided by the present invention, as the source of the applicants' gas supply is atmospheric air and the atmospheric oxygen of same is the only component of the atmospheric air that is affected, with the atmospheric oxygen being converted into stable and high reactive oxygen allotrope gas in ionized form that is part of the air flow involved are interspersed into the water to be treated. Water being dipolic in nature, the natural attraction involved results in the highest levels of the ionic oxygen allotropes being held in saturation in the water regardless of ambient temperature and pressure changes with the result that the ideal water treatment involved is promptly achieved even though flow and diffusion rates of the air flow into the water are at relatively low volume time rates.

Other objects, uses, and advantages will be obvious or become apparent from a consideration of the following detailed description and the application drawings in which like reference numerals indicate like parts throughout the several views.

In the drawings:

Figure 1 is a flow diagram illustrating the basic aspects of the system of the instant application;

Figure 2 is a fragmental view in perspective diagrammatically illustrating the nature of the special multiple permanent magnetic flux field-photolysis ionizing radient energy, atmospheric oxygen transforming arrangement, that is at the atmospheric oxygen transforming site of the generator, the showing of Figure diagrammatically illustrating the entry end of atmospheric oxygen transforming air flow way or corridor of the specific generator embodiment of Figures 3—8;

Figure 3 is a diagrammatic perspective view of one generator embodiment of the invention that is arranged specifically for industrial water treatment applications, with the front cover partially broken away;

Figure 4 is a side elevational view of the generator of Figure 3, taken from the right hand side of Figure 3;

Figure 5 is a diagrammatic front elevational view of the generator shown in Figures 3 and 4, with parts shown in section or in phantom, and with the generator shown connected to a diagrammatically illustrated oxidant gas infusion device for interspersing the oxidant gases produced by the Applicant's system in water to be treated;

Figure 6 is a diagrammatic exploded sectional view of the generator shown in Figure 5;

Figure 7 is a component elevational view taken substantially along line 7—7 of Figure 6, illustrating the ambient air intake end of the generator of Figures 5 and 6;

Figure 7A is a fragmental sectional view, on an enlarged scale, illustrating a recycling air flow control device incorporated in the recycling conduiting of Figure 5;

Figure 8 is a fragmental view taken substantially along line 8—8 of Figure 6, illustrating in plan one of the removable electrode assemblies that are employed in the embodiment of Figures 2—6 as part of the photolysis device;

Figure 9 is a diagrammatic perspective view illustrating a smaller capacity generator suitable for commercial non-manufacturing applications, such as for treating the water of swimming pools, spas and drinking water installations, with the front panel of the generator and the permanent magnetic rod devices associated with same being shown displaced to expose the interior of the generator;

Figure 10 is a fragmental sectional view through the generator cabinet of the embodiment of Figure 9, illustrating the manner in which the photolysis lamp is applied to same;

Figure 11 is a perspective view of yet a smaller capacity generator that is especially suited for use in connection with home water facilities, such as home swimming pools, hot baths, home owners water purification systems, and the like;

Figure 12 is a view of the embodiment of Figure 11 shown in the same manner as Figure 6, for illustrative purposes; and

Figure 13 is a bottom plan view of the generator of Figures 11 and 12.

However, it is to be distinctly understood that the specific drawing illustrations provided are supplied primarily to comply with the requirements of the Patent Laws, and that the invention is susceptible of modifications and variations that will be obvious to those skilled in the art, and which are intended to be covered by the appended claims.

General Description

As already indicated, the present invention is directed to the basic approach in water treatment or processing for disinfection, descaling, detoxification, purification, and related purposes in which the acting agent involved is oxygen allotropes in ionized form, and which is obtained by cycling ambient air through the system generator and conduiting and into interspersed relation within the water to be treated, whereby atmospheric oxygen, to the exclusion of atmospheric nitrogen and other components of the air, is transformed into the oxidant ionic gas that serves as the oxidizing agent in accordance with the invention.

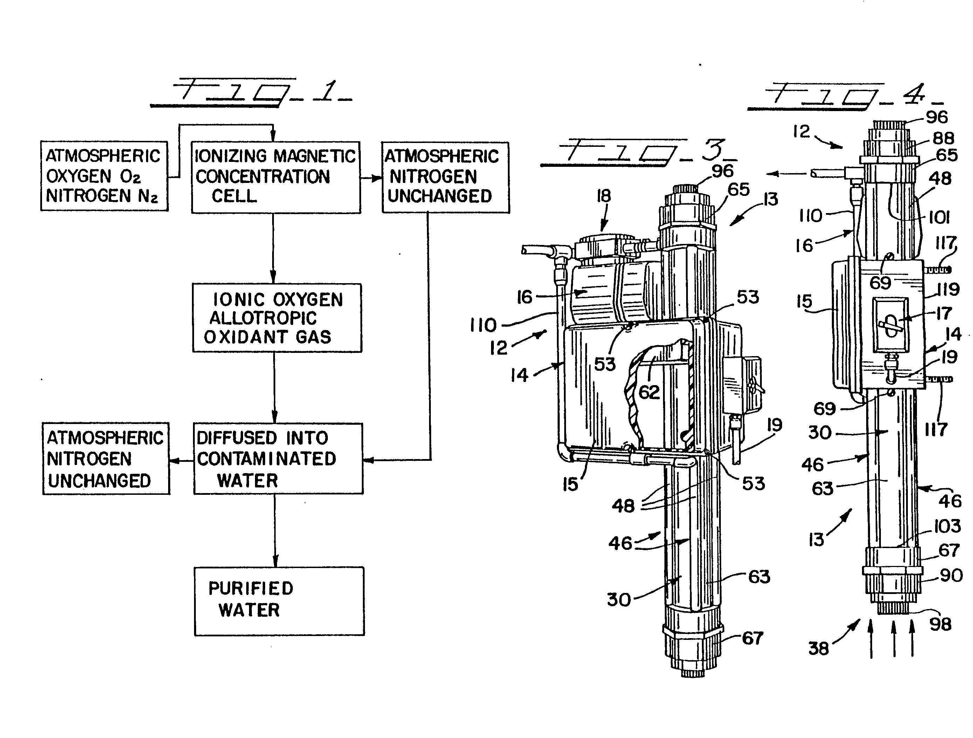

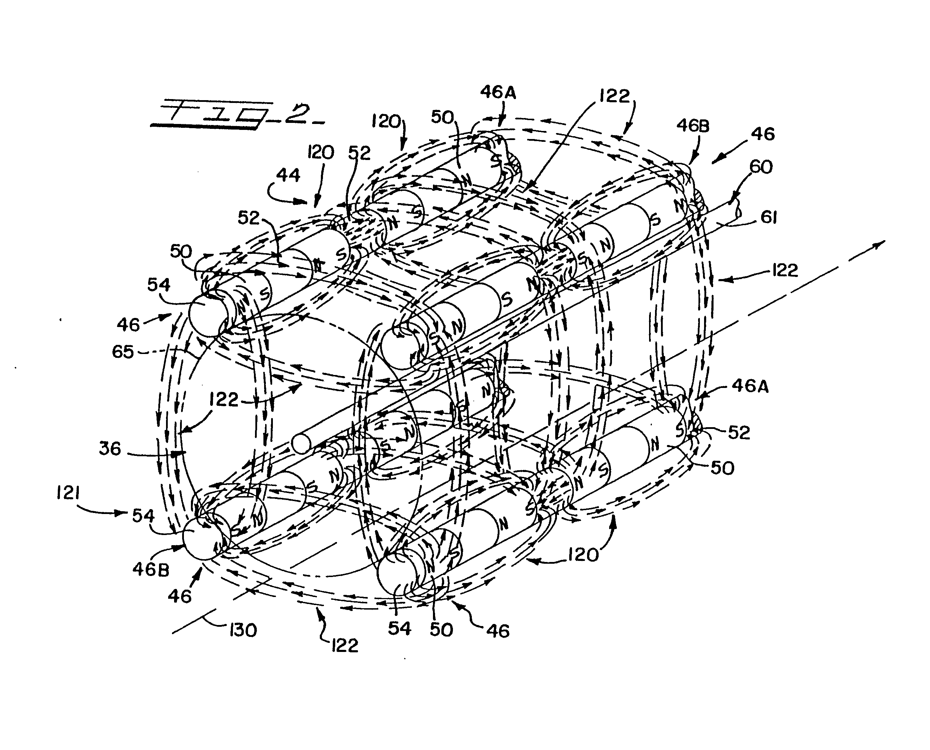

Referring first to Figure 1, the flow diagram diagrammatically illustrates the general nature of the Applicant's processing apparatus and system, pursuant to which an atmospheric oxygen transforming generator is provided that is in the nature of an oxygen allotrope forming and ionizing magnetic reactor and concentration cell, through which ambient air is passed, with the generator defining a gas flow path or corridor having an atmospheric oxygen allotrope forming and ionizing site equipped as diagrammatically illustrated in Figure 2, which energy activates only the atmospheric oxygen, to the exclusion of atmospheric nitrogen and other miscellaneous components of the air, which pass through the generator unaffected. The ambient air flow involved leaves the generator as an oxidant gas flow and is passed through suitable conduiting or piping to the water to be treated; the oxidant gas flow contains the highly energy charged or energy activated oxygen allotrope ions in concentrated gaseous form and mixed with the other air components involved, and in the application of the gases to the water, the gases are interspersed into the water, as by employing gas diffusion or injecting devices of the type hereinafter disclosed. The indicated gas diffusion or injection preferably is into a stream of the water as it is being circulated or recirculated in a continuous flow through a conduit which brings the water to the main body of water to be treated. The atmospheric nitrogen and other air content gases which are unaffected by the system generator are harmlessly interspersed in the water and returned to the atmosphere, while the oxygen allotrope ions provided by the system chemically and magnetically seek out the water molecules adjacent same and oxidize contaminants and other undesirable materials associated with same, to reduce surface tension of same, enhance agglomeration and settling out of colloidal solids from same, disinfect and decontaminate same, and stabilize and buffer pH factors or same.

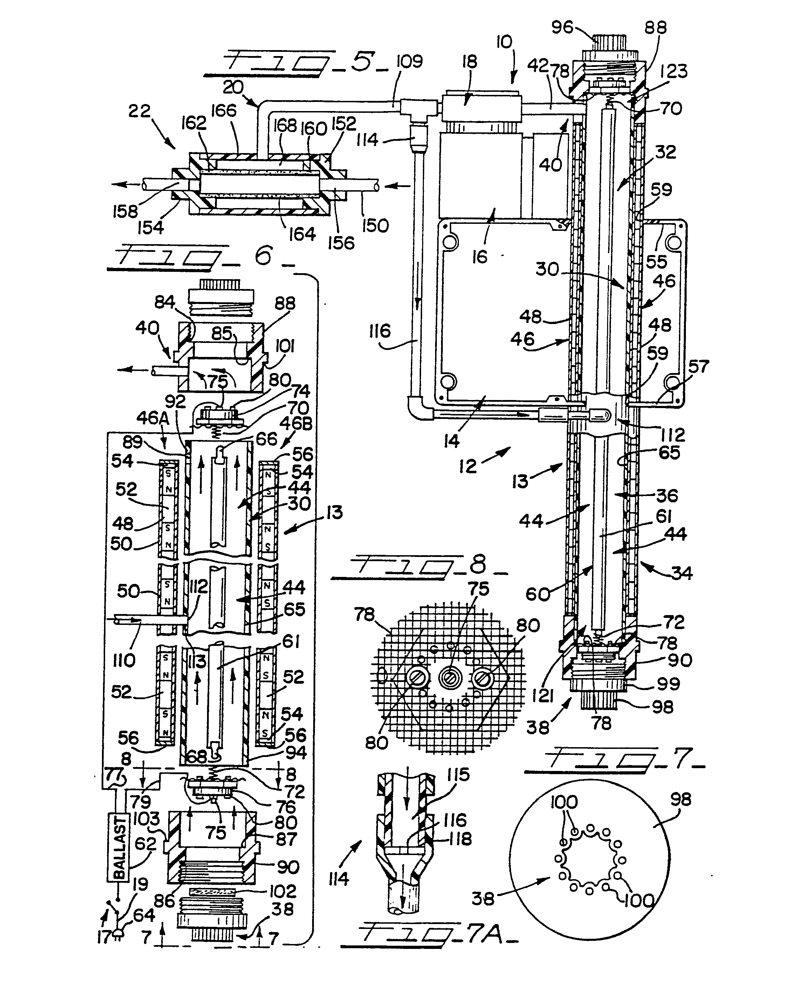

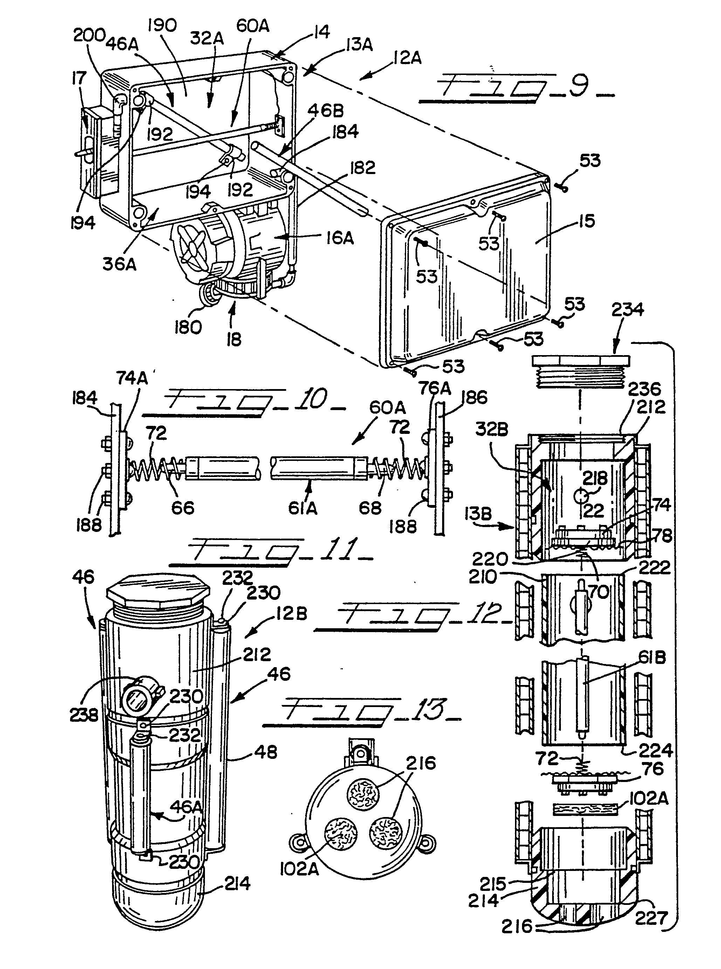

Diagrammatic Figures 3, 4, 5 and 6 generally illustrate the basic components of an apparatus 10 arranged for industrial or manufacturing application use, which includes generator 12 comprising elongate reactor cell 13 mounted in cabinet 14 (see Figures 3 and 4) on which cabinet 14 is also mounted, in self contained apparatus 10, suitable electrically operated drive motor unit 16 that drives air compressor 18, which in the embodiment of Figures 2—6 draws into the generator cell 13 from the ambient air an ambient air flow that contains the atmospheric oxygen with which the invention system operates, and supplies the transformed atmospheric oxygen and accompanying air through a suitable diagrammatically illustrated conduiting 20 to diagrammatically illustrated gas dispersing device 22 for diffusing the oxidant gas involved into the passing water that leads to the main body of water to be treated, which may, for example, be an industrial machine tool coolant system, or the like.

As indicated in Figures 5 and 6, the atmospheric oxygen processing cell 13 of this embodiment of the invention generally comprises a housing or casing 30 defining a gas flow chamber 32, with the housing 30 being formed from a suitable nonmetallic material, such as a polyvinyl chloride (PVC). In the embodiment of Figures 2—8, the housing or casing 30 is of cylindrical configuration, but in any event the housing 30 is to define the basic reaction cell 13 of the generator and defines, in forming chamber 32, gas flow way 36 having an air inlet indicated at 38, a gas flow or outlet for the treated air, indicated at 40, the latter being suitable connected to compressor 18 by suitable conduit 42.

Compressor 18 may be of any suitable type, that illustrated being a closed chamber diaphragm type compressor, rated for sixty psi output, that is commercially available, as from Gast Mfg. Corp., of Benton Harbor, Michigan, with the motor drive unit 16 being suitably affixed to cabinet 14, as by screw mounting or the like, and including a conventional electric motor and associated gear reducer, etc., as needed to mount and continuously drive compressor 18, and in the embodiment of Figures 2—8, to provide a gas discharge into conduiting 20 at suitable pressure, depending on the application, as for instance thirty-forty psi. Where the plant or other facility at which apparatus 10 is to be employed has its own built in compressed air supplying conduiting system and source, as many industrial plants do, the cell 13 at the way inlet 38 is suitably connected thereto through a suitable pressure flow rate control valve device of any conventional type, such as a needle valve, to provide the air intake flow pressure rate that results in an oxidant gas discharge flow at outlet 40 in the pressure range indicated; the compressor 18 and its drive unit 16 for such embodiments may be omitted.

The cell 13 along the gas flow way 36 is equipped to define the atmospheric oxygen transforming site 44, which is diagrammatically illustrated in the partial showing of Figure 2, and which from the standpoint of fundamentals comprises spaced permanent magnet rod devices 46 of a special nature suitably secured with respect to the housing 30. The magnet rod devices 46 each comprise rodlike tubular cylinders or casings 48 each containing a series of permanently magnetized short rod type magnets 50, with the magnets 50 of each casing 48 being longitudinally aligned and in alternating polar relation, and with adjacent magnets 50 being separated by stainless steel slugs or short bars 52 of the same diameter as magnets 50. Magnets 50 in a preferred form are either of the ceramic type as a residual induction strength of 3,000 Gauss, or of the intermediate alloy type (Samarium Cobalt) as a residual induction strength of 9,000 Gauss, and cylinders or casings 48 are formed from either stainless steel or schedule 40 PVC (the latter preferred). At the opposite ends of the casings 48, a stainless steel slug 54 completes the filling of the casing, with ends 56 of the casings 48 being suitably bonded in place to close casings 48, as suggested in Figure 6 (welded if stainless steel, cemented with PVC glue if PVC).

The cabinet 14 in which the casing 30 is mounted is a standard electrical cabinet with removable cover 15, both made from PVC or the like, and offered commercially by Hoffman Engineering Corporation, a Division of Federal Cartridge Corporation, of Anoka, Minnesota. Magnets 50 are either the ceramic magnet product of the intermediate alloy magnet product commercially available from Indiana General, a division of Electronic Memories and Magnetics Corporation, Valparaiso, Indiana. Cover 15 is removably secured in place on cabinet 14 by appropriate screws 53 applied to the respective cabinet walls.

In the specific embodiment of Figures 2—6, the housing or casing 30 and rod devices 46 are mounted in place in generator 12, by applying them through cabinet 14, with the rod devices 46 being externally of casing 30 and positionally located in the four equally spaced (circumferentially) positions indicated in Figures 2—6, about casing 30. Further, the rod devices 46 of apparatus 10 are oriented such that alternate rod devices 46 are oppositely disposed along the length of the chamber 32, as diagrammatically indicated in Figure 2. Thus, two of the diametrically opposed rod devices 46 have the north poles of their magnets at the top of the magnets 50, while the other two diametrically opposed rod devices 46 have their south poles at the top of the magnets 50, in the embodiment of Figures 2—8.

In the generator 12, the housing or casing 30 and rod devices 46 are applied to cabinet 14 by the cabinet upper and lower walls 35 and 57 being apertured as at 59, to receive them in substantially complemental fit relation thereto, with the housing or casing 30 being suitably anchored to the cabinet 14, as by employing anchoring upper and lower keying screws 59 inserted into casing 30 adjacent the top and bottom of cabinet 14 (see Figure 4), or by being bonded using suitable PVC glue or the like. Rod devices 46 are lodged against the casing side wall 63 and between the enlarged ends 65 and 67 of same, in the generator 12, as clearly shown in Figures 3 and 4, but also may be fixed in place using right angle end brackets or pipe mounting clips and fastening hardware.

Disposed along the way 36, and extending longitudinally of the chamber 32, is the oxygen photolysis device 60 that is in the form of a suitable ionizing electron volt radiant energy emitting lamp 61 designed to emit ultraviolet wave length energy of the nanometer light wave length that insures proper ionization and electron-volt activation of the atmospheric oxygen that is passed through chamber 36. In a preferred embodiment of the invention adapted for industrial applications the lamp 61 is a 40 watt mercury vapor lamp of a commercially available type, such as lamp Model No. G37T6VH 40 watt lamp available from Westinghouse Electric corporation, which is powered by a suitable conventionally arranged power supply device diagrammatically illustrated at 62 (in block diagram form, see Figure 6), which includes a suitable starter and a ballast transformer and is suitably mounted in the housing cabinet 14; a suitable ballast is No. 843-SL-TCP, offered by Universal Electric Company of Chicago, Illinois, or ballast Model No. SM-140-STP, offered by Advanced Transformer Company of Chicago, Illinois, which device 62 may be electrically arranged in accordance with conventional starter and ballast practices, with the ballast being properly matched with the wattage of lamps of the type represented by lamp 61, and provided with suitable plug 64 for connection of electrical energy supply conduiting 19 to the usually available 115 volt AC electrical energy source or its equivalent. Cabinet 14 suitably mounts conventional off-on switch 17 with which motor 16 is suitable connected in parallel with the circuiting indicated in Figure 6, for suitable off-on control of apparatus 10. Where the air supply to generator 12 is from the plant built in compressed air system, the air supply to cell 13 is controlled and set manually by adjusting the aforementioned needle valve.

In the generator 12, the lamp 61 illustrated as offered commercially includes electrodes 66 and 68 at the respective ends of same, which in the form illustrated respectively seat in helical spring type stainless steel electrode contacts 70 and 72, respectively, which are suitably mounted on removable mounting blocks 74 and 76 (see Figures 5 and 6), respectively, by centrally located screw and nut assemblies 75 that are formed from stainless steel and also serve as electrical conductors between the respective springs 70 and 72 and the lead wires 77 and 79 for lamp 61 that are suitably connected to ballast device 62 (see Figure 6). Each mounting block 74, 76 is provided with a foraminous mounting disc 78, secured in place by employing a pair of suitable screw type fasteners 80 (see Figure 8). Coupling members 88 and 90 form the respective ends 65 and 67 of casing 30 and frictionally receive the respective ends 92 and 94 of the casing side wall 63 to seat disc 78 same against the coupling member respective shoulders 85 and 87, as indicated by Figure 5. The casing side wall 63 is of cylindrical tube configuration and at its end 92 it is suitably apertured as at 89 for communicating way 36 with conduit 42 in the assembled relation of housing or casing 30. Couplings 88 and 90 are bonded or cemented in place on casing side wall ends 92 and 94, as by employing a suitable adhesive. Disc 78 is in the form of stainless wire grid 95 of large mesh size to accommodate the air flow past mounting block 76 and through way 36 that is contemplated by the present invention, discs 78 conveniently being made of the same size and being apertured as at 97 to accommodate the respective fastening devices 75. Blocks 74 and 76 are preferably removably connected by fasteners 80 to the respective discs 78 for forming removable electrode mounting assemblies for lamp 61, that may be removed from either end of casing 30; removal of one of the blocks, for instance, block 74, permits ready replacement of a lamp 61 by employing a suitable gripping tool applied through aperture 97, for removal and replacement of same through aperture 97.

The coupling members 88 and 90 threadedly mount the respective closure caps 96 and 98 that close off the chamber 36, with the cap 98 being ported or apertured as indicated at 100 (see Figure 7) for ambient air flow therethrough into chamber 36 on operation of compressor 18 where the generator 12 is to be connected to a plant ported for connection to conduiting leading from the aforementioned needle valve. A suitable dust filtering fiber mesh pad 102 is applied between the cap 98 and mounting block 76, with the mounting blocks 74 and 76 being the same in construction and proportion. Threading of caps 96 and 98 into the respective coupling members closes off the ends of casing 30, and the respective cap flanges 99 space same from the respective shoulders 84 and 86 and provide a seal at the casing ends. Lamp 61 is thus mounted for ready replacement of same as needed by removing one of the end caps 96 or 98 for that purpose. Rod devices 46 are lodged between the external shoulders 101 and 103 defined by coupling members 88 and 90. The end couplings 88 and 90, mounting blocks 74 and 76, and end caps 96 and 98, as well as casing side wall 65, are all formed from PVC for ease of assembly and securement, as well as electrical insulating characteristics. Pad 102 is preferably of the fibrous type made up of a mixture of 50% nylon fibers and 50% polyester fibers, all of 100 diener size. The components of generator 12 that are bonded together thus may be so secured by employing PVC glue, but other non metallic materials may also be employed for forming generator 12, including stainless steel, aluminum, and other plastics, with the bonding required being provided by bonding substances suitable for the materials employed.

In the specific apparatus 10 illustrated in Figure 5, the conduiting 20 adjacent its inlet 109 includes recycling conduiting 110 that is connected to chamber 36 where indicated at 112 (casing side wall 65 being suitably apertured at 113 for this purpose) for recycling back into the chamber 30 a portion of the treated air flow therefrom, approximately ten percent in a successfully operating embodiment. Conduiting 110 for this purpose includes control orifice device 114 which is diagrammatically illustrated in Figure 7A and defines the passage 115 therethrough that is in part defined by restricted orifice 116 of orifice disc 118 that may be formed from nylon or the like. Cabinet 14 has mounting studs 117 (see Figure 4) fixed in its back wall 119 adjacent its four corners for mounting generator 12 on a suitable vertically disposed mounting panel or the like, so as to be disposed as indicated in Figures 3 and 4 for operating purposes, using suitable mounting nuts, etc.

Referring now more particularly to Figure 2, the showing there provided is for the purpose of diagrammatically and schematically indicating, for the embodiment of Figures 2—8, the nature of the way or corridor 36 that ambient atmospheric air is passed through on operation of the apparatus 10. The showing of Figure 2 corresponds to the lower end of the housing or casing 30, with only the magnets and separating and end slugs of rod devices 46 and the magnetic lines of force presented by same, the photolysis lamp 61, and an outline of the cylinder side wall 65, being illustrated (the latter in phantom only), and for the purpose of indicating the peripheral physical confines of the flow way or corridor 36 of generator 12. As already indicated, the magnetic rod devices 46 each comprise the rod type permanent magnets 50 contained within the respective casings 48, with stainless steel rods or slugs 52, which are thus non-magnetic, separating the individual magnets 52, and smaller stainless steel end slugs 54 being disposed at each end of the rod devices 46.

As already indicated, the magnets 50 are mounted within the respective casings 48 in alternate relation so that, lengthwise of the rod devices 46 unlike poles of adjacent magnets 50 are in magnetic coupling, attraction type, flux defining relation, longitudinally of the respective rod devices 46, as diagrammatically illustrated in Figure 2 at 120.

As has also been disclosed, it is preferred that alternate adjacent rod devices 46 be oppositely oriented, and for purposes of making clear this feature, in the showing of Figure 2 one set of alternate rod devices 46 are numbered 46A, and the other set of such alternate rod devices are designated 46B, from which it will be seen that at the intake end of the flow way or corridor 36, the magnet rod devices 46A have the north poles of their magnets 50 at the lower ends of the individual magnets while as to the rod devices 46B, the south poles of the individual magnets 50 are at their lower ends. Thus, the magnets 50 of magnet rod devices 46A have their north poles at their lower ends, while the magnets 50 of magnet rod devices 46B have their south poles at their lower ends; the devices 46A and 46B are accordingly in inverted, oppositely oriented, relation. The rod devices 46, which for any generator 12 may be all devices 46A, or all devices 46B, are arranged in the alternate position form of generator 12. With this in mind, it is a feature of the invention that with the rod devices 46 employed having a spacing consistent with the objectives of the invention, magnetic flux of attraction pattern type will form crosswise extending magnetic flux patterns 122 between the adjacent rod devices 46, as diagrammatically illustrated in Figure 2 for generator 12 that involves devices 46A and 46B, between the north and south poles of parallel, coextensive magnets 50, of the adjacent devices 46A and 46B. Where only devices 46A, or only devices 46B are employed in a given cell 13, the same flux patterns 122 will be present, but shift a bit askew from substantial normal relation relative to adjacent devices 46 (since like poles will be at like ends of the respective magnets 50). Where devices 46A or devices 46B are oppositely or diagonally opposed across way 36, it is believed flux patterns 122 will extend between them also, at least to a degree.

In this connection, it is pointed out that in the showing of Figure 2 the flux patterns are only each partially illustrated to avoid an undue confusion of lines. Flux fields 120 are oriented 360 degrees about their respective devices 46, 46A and 46B, and each flux field 120 extends longitudinally of one aligned adjacent pair of magnets 50, with the multiple flux lines thereof extending between the unlike poles of such pair, as indicated in Figure 2. Flux fields 122 each comprise lines of flux extending between unlike poles of adjacent coextensively parallel magnets 50 of adjacent devices 46, 46A and 46B, as indicated in Figure 2, and are of the approximately elongated, flat elliptical attraction form indicated.

The strength and orientation of the cross magnetic lines of force of cross magnetic fields 122, in attraction pattern, will depend on how many rod devices 46 are employed in a particular unit, the strength of the magnetic fields of the respective magnets involved, and the spacing of the respective rod devices 46 from each other. For purposes of the present invention, it is critical that there be at least one pair of devices 46A, or one pair of devices 46B, or one rod device 46A and one rod 46BA (that is, a second rod device 46 having the opposite polar orientation indicated by the rod devices 46B relative to rod devices 46A) at diametrically opposed positions at the margin of the flow way or corridor 36, although rod devices 46 making up devices 46A and 46BA may be located interiorly or exteriorly of the chamber 32, assuming the chamber 32 is defined by a suitable non-magnetic material such as the aforementioned PVC. For best results, the rods 46A and 46B should have a spacing that lies in the range of from about two inches to about eight inches, depending on the physical configuration of the flow way or corridor 36, which can also be of parallelepiped configuration, in addition to the generally round or cylindrical configuration illustrated in the embodiment of Figures 2—8. It is preferred, however, that the photolysis lamp 61 be disposed at the mid portion of the flow path, it being a further feature of the invention that the ionizing electron volts energy emanating therefrom, is emitted 360 degrees thereabout, and is in blanketing or enveloping relation to the magnetic flux patterns 120 and 122.

In this connection, the ballast and the wattage of the photolysis lamp 61 employed should be carefully matched in accordance with standard techniques to produce an electronic mercury vapor excitation which yields predominantly nanometer spectral wave length emissions, in the range of from about 170 to about 257, with the preferred range being 253.7 - 357, which provide the short wave length ultraviolet light energy that maximizes ionization of atmospheric oxygen, and longer wave length infrared emissions that are believed to impart a reinforcing thermal magnetizing effect on the resulting ions.

When ambient air flow is induced into and through flow way or corridor 36, the bulk of the air entering the flow way or corridor 36 at its intake end 121 is atmospheric oxygen and nitrogen, atmospheric air containing approximately 78 per cent nitrogen and 21 per cent oxygen by volume. While ordinary free nitrogen is recognized as being one of the most inert of all elements, oxygen is one of the most active of elements, although its activity is greatly reduced in atmospheric form because it is mixed with about four times its volume of nitrogen. However, oxygen in free atmospheric form ($O_2$) has paramagnetic characteristics which the Applicant has found to be a major factor in providing the unique results achieved by the present invention. In this connection, the Applicant has found that atmospheric oxygen gas molecules are significantly more paramagnetic in character than the relatively inert atmospheric nitrogen molecules, so much to the extent that the atmospheric nitrogen molecules are essentially unaffected by the presence of intense magnetic fields.

It is a basic feature of the present invention that the Applicant employs the paramagnetic characteristics of atmospheric oxygen molecules, and the capability of atmospheric oxygen molecules, and the capability of atmospheric oxygen of readily being ionized into ozone and/or other oxidizing allotropes, to serve as the basis for providing the oxidizing agent that is to be interspersed in the water to be purified. However, the Applicant has found that his special magnetic flux field patterning for the generator flow way or corridor, and the inundation of same by ionizing ultraviolet wave length emissions, produces stable but highly energized oxidant oxygen allotrope ions of electrically charged ozone and singlet molecular oxygen (as distinguished from natural ozone), which have been proved to be far more active and effective in achieving nonchemical type water purification, disinfection, detoxification, descaling, and the like, than neutral ozone, and without having to use any supplemental chemicals of any kind. This discovery thus permits the Applicant's water treatment to be provided by the active substance being taken from the ambient atmosphere and applied to the water in question for highly effective purification etc. results without adversely affecting the water in any way or the conduiting or containers which guide or contain same.

Referring again to Figure 2, it is to be understood that on actuation of the apparatus 10, as by moving switch 17 to its circuit closing position (assuming plug 64 is connected to a suitable source of electrical power), atmospheric air enters flow way or corridor 36 under the action of compressor 18. In the embodiment illustrated in Figure 2—8, this air flow is in an annular pattern about the photolysis lamp 61 and is through the portions of the flux patterns 120 and 122 that are within the flow way or corridor 36, the latter being, as indicated, enveloped and bombarded by the radially directed emissions from the photolysis lamp 61.

The relatively inert atmospheric nitrogen content of this air flow follows the rectilinear or straight dashed line 130 of Figure 2, which indicates that atmospheric nitrogen passes directly through the generator 12, under the action of the air flow inducement provided by compressor 18, without being in any way effected or changed by generator 12. The components of the ambient air other than atmospheric oxygen follow the same pattern in the air flow through way 36.

However, the molecules of atmospheric oxygen, on entering the flow way or corridor 36, are immediately deflected by attraction to the multiple magnetic lines of flux involved in flux patterns 120 and 122, and such molecules being highly numerous within the air flow, are deflected in multiple random directions within the flow way, while at the same time they are bombarded by the photolytic electron-volt radiations emanating from the photolysis lamp 61. As indicated, the atmospheric oxygen on leaving flow way or corridor 36 at its outlet end 123 is transformed and ionized to stable but highly energized and reactive oxygen ion allotropic structures and appear to be electrically charged ionized ozone and singlet molecular oxygen.

It is believed that as the atmospheric oxygen passes through the flow way or corridor 36 under the inducement of the air flow involved, the atmospheric oxygen molecules are deflected, retained, and bounced around by and between the flux lines of force within the way or corridor 36, with the atmospheric molecules apparently having multiple impacts with each other in the presence of the permanent magnetic flux and the ultraviolet ionizing radiations. It appears that the atmospheric oxygen molecules themselves by reason of such impacts within the magnetic fields involved achieve increases in their vibrational and rotational energy levels and absorb magnetic flux energy to reach higher levels of paramagnetic energy state. The ultraviolet electron-volt energy acts on these energized atmospheric oxygen molecules to provide the electron activation energy requirements that disassociate or dissolve the naturally occurring atmospheric oxygen double electron bonds (atmospheric oxygen having a valence of 2), that releases atomic oxygen, with the free atomic oxygen making available intense electrical and magnetic energies within the flow way or corridor 36. The atomic oxygen appears to reform under the inducement of the ultraviolet emission energy involved to apparently form hybrid ozone ions and singlet molecular oxygen ions that are stable at much higher energy levels and have been found to possess oxidizing activation characteristics, when interspersed in water, that are much greater than can be achieved with atmospheric oxygen or neutral ozone. It appears that the resulting newly formed oxygen ion allotropes have a charge center with an appreciable negative charge within the higher electron bond structure of the resulting ions, as well as the ion generated higher paramagnetic attraction capabilities, and are thus step up energy activated by the practice of this invention.

A factor that apparently aids in the high energy charging of the oxygen allotrope ions involved is that the magnetic flux of way or corridor 36 appears to have a magnetic attraction effect on such ions, tending to concentrate within way 36 the oxidant gas involved, to the exclusion of the atmospheric nitrogen and other air components (other than oxygen) of the air flow through way 36, thus prolonging the transformation treatment time of the atmospheric oxygen molecules involved, with added benefits from the standpoint of reaction and oxidizing potential.

The recycling oxidant gas flow provided by conduiting 110 back to flow way 36 has been found to have a catalytic effect on the atmospheric oxygen transformation within way 36 which surprisingly increases the aforementioned ionic oxygen allotrope content of the air discharge at way outlet 123 in the range of 7—10 percent.

The air flow containing the transformed atmospheric oxygen, the unaffected nitrogen, and the remainder of the air content that has entered at inlet 38, is discharged into conduiting 20 for conveyance to gas diffusion device 22, and for the generator 12, the gas discharge will be in the range of 30—40 psi, though this pressure will depend on the capacity of the compressor 18 (or the pressure of the compressed air supplied to cell 13 from a plant conventional compressed air source), the flow rate factors of the gas through flow way 36, and the like that can be suitably adjusted to suit conditions, and needs of specific application.

A special aspect of the invention is that the presence in the Applicant's oxidant gas generator 12 of the magnetic flux fields in the flow way 36 is that the flow way or corridor 36 is made self cleaning for the length of the photolysis lamp 61, as the permanent magnetic flux keeps ambient water, oil, and dust from adhering to the photolysis lamp 61, thereby avoiding gradual build up of such deposits on the lamp and gradual blocking of the ultraviolet rays emitting therefrom. Matter of this type bears a slight charge and otherwise tends to adhere to the photolysis lamp, lamps of this type producing their own magnetic field. Thus, even though the Applicant's generator 12 is intended to operate continuously, its photolysis emission function continues with no decrease and unabated during the entire period of operation due to the self cleaning action the Applicant's magnetic fields have on the photolysis lamp. The permanent magnet flux fields with which the photolysis lamp is associated in accordance with the invention are far stronger than the electro magnetic field generated by the lamp itself. Atmospheric moisture, dust, and oil vapor impurities are held in vapor suspension by the stronger permanent magnetic field and pass through the generator with no insulating effect on the photolysis lamp. It is thus a feature of the invention that the magnet devices 46A and 46B have a length that makes the magnet devices at least substantially coextensive with the photolysis lamp they are associated with in a flow way 36.

For purposes of disclosure, diffusion device 22 is shown incorporated in conduit 150 through which a water flow that originates from the body of water to be treated is circulated, and for disclosure purposes conduit 150 may be assumed to represent a water return line of a machine tool water coolant system conveying the coolant water from the point of use to the point of storage for reuse. Diffuser 22 comprises a pair of couplings 152 and 154 receiving in leak from relation thereto the ends 156 and 158 of the conduiting 150 at diffuser 122, as well as the ends 160 and 162 of diffuser tube 164 that is formed from a suitable porous material, such as the sandstone tube product made and sold by Norton Company (Industrial Ceramics Div.), Worcester, Massachusetts. Sleeve 166 is mounted between the couplings 152 and 154 in leak free relation thereto and in spaced relation about tube 164 360 degrees thereabout to define air pooling chamber 168 into which the air including the transformed oxygen passes from conduiting 20. The air including the transformed oxygen permeates through the tube 164 and is diffused into the water flowing through conduiting 150 in small bubble form, the pressure of the air within the conduiting 20 being under higher pressure than the liquid within the conduit 150. A pressure difference on the order of five pounds per square inch is normally adequate to serve this diffusing function.

Alternately, the gas flow from conduiting 20 may be injected into water flow conduiting 150 or its equivalent utilizing the injector disclosed in my U.S.A. Application Serial No. 325,817, filed December 2, 1981 (see Figures 7—9, the disclosure of which is incorporated herein by this reference).

Another important aspect of this invention has to do with the special compatibility provided by the oxidant gas supplied the water to be treated by the apparatus 10, and the dipole nature of water. It is well known that as a result of the distribution of the electrons and hydrogen atoms in water, one end of the water molecule may be considered positively charged and the other end negatively charged; such molecules are said to be dipole in nature, and they have a dipole moment which is dependent upon the magnitude of the charges and the effective distance between them, water molecules being known to have a high dipole movement.

The present invention thus contemplates that by the application of the transformed oxidant gases into water there is a naturally occurring magnetic and electro chemical attraction of the oxidant gas ions to and among passing water molecules, to the extent that as the apparatus 10 operates to provide the oxidant gas diffusion into the water to be treated that has been indicated, including the transformed oxygen content thereof, the highest level of the ionic oxygen allotropes involved can be held in solution in the water during processing of same regardless of ambient temperature and pressure changes. With the oxidant gases inserted in the water to be treated thus being widely dispersed by the natural affinity of the oxygen allotrope ions to water molecules, the oxidant ions are brought into corresponding oxidant relation to the impurities involved by the stronger chemical attraction of the oxidant ions to the contaminants than to the water molecules. Furthermore, the oxidant ions involved have also been found to have a neutralizing effect on the molecule bonds that comprise surface tension. The surface tension involved may be reduced in the range of from about 20 to about 40 percent, but in any event surface tension reduction is significant and facilities settling out of solids that are entrained in the bonded together water molecules.

Several examples of tests illustrate the effective nature of the practice of the invention.

In one test embodiment of the invention arranged in accordance with the embodiment of Figures 2—8, was employed to diffuse air flow from a conduit 10 at the rate of 0.1 cubic foot per minute into the return condensate make up water that was intermittently fed to a 100 horsepower low pressure steam boiler, the study being carried out in a Chicago, Illinois industrial facility. The object of the study was to evaluate the ability of the invention oxidant gases as diffused in the condensate make up water to oxidize, remove or descale plated calcium carbonate and magnesium carbonate scale encrustation from the internal boiler fire tube surfaces and the internal surfaces of the water piping distribution system involved. It was also desired to prevent rescaling, and improve the entire system heat transfer by removal of insulating solids from the water. After thirty days practice of the invention, without any chemical descaling agents being employed, it was found that the water system contained large quantities of loosened scale deposits that were filtered out of the system. The water being treated had an increase in pH acidity at the same time indicating that scale solids have been coming into and out of solution in the water within the return condensate flow; it has been found that the oxidant gas removal of plated calcium carbonate scale deposits in practising the invention as represented by this test releases carbon dioxide gas from the carbonate structure as the carbonates are oxidized, with the carbon dioxide immediately forming carbonic acid in the boiler water and freely assisting in the efficiency of complete boiler system descaling with the resultant vast fast improvement in heat transfer characteristics.

Another test involved the application of an embodiment of the invention in accordance with the showing of Figures 2—8 to treatment of contaminant water based machine tool coolants.

Water soluble oil coolants, semi-synthetic coolants, and full synthetic coolants were evaluated for, among other things, the degree of fungus and bacterial decontamination achieved by the practice of the invention; results indicated that an 85 percent reduction occurred in total bacteria count within four to six hours of the commencement of the operation of the invention, which involved a continuous application of 0.1 cubic foot per minute oxidant gas application to the liquid being treated on a recirculation batch treatment basis. Fungus populations in the coolants being treated were found to be completely destroyed within the first two hours of the treatment.

Yet another test involved the application of an embodiment of the invention equivalent to the arrangement of Figures 2—8 in which 0.2 cubic foot per minute of the oxidant gas flow from a conduiting 20 was continuously diffused into a twenty-five gallon sample of drinking water aquafer ground water contaminated with 1500 parts per billion of trichloroethene (TCE). Within two hours after treatment commenced, TCE contamination levels had been reduced 99 per cent or greater with improvement in overall water clarity.

In the embodiment of Figures 2—8, the cylinder or casing 30, the coupling members 88 and 90, the caps 96 and 98, and the mounting blocks 74 and 76 are all formed from polyvinyl chloride of a suitable grade. Motor 16 and compressor 18 are conventional commercial apparatus while the conduiting 20, 42, and 110 may be any type of conduiting, although plastic conduiting is preferred because of its simplicity of application. The diffuser coupling members 152 and 154 and sleeve 162 may be formed from polyvinyl chloride and suitable bonded together in leak free relation, as well as to conduiting 150, as by employing PVC glue.

The air flow through flow way for corridor 36 may be mechanically generated, as in the embodiment of Figures 2—8, but for installations requiring only a low oxidant gas flow rate at the diffuser, say in the range of from about 0.05 to about 0.1 cubic foot per minute, convection flow through the generator, as induced by the operation of the photolysis lamp 61, will provide adequate flow rate application of the oxidant gases to the liquid to be purified.

The lamps 61 as applied to generator 12 are preferably of 40 watt capacity, and for industrial applications the apparatus 10 may have several additional cells 13 mounted in the cabinet 14 in the same manner but in spaced relation for increased oxidant gas capacity, as desired, and of course, each cell is equipped as indicated in Figures 2—8. Industrial generators of two and four cells comparable to generator 12 with their ways 36 connected both in series and parallel, insofar as their ways 36 and their connection to conduiting comparable to conduiting 20 are concerned, depending on the flow-rate supply needs for particular applications, and with their cells 13 applied to cabinet 14 horizontally, have been in active successful experimental use by Applicant.

Where the oxidant gas capacity has lower requirements, of course the lamp 61 may be proportionally of lesser wattage, and the magnet devices 46 in or about a particular way 36 may be reduced in number to two or three; 13 watt lamps and appropriately matched ballasts in association with other component parts of the type illustrated have been successfully operated by Applicant, employing devices 46 in numbers of two or three, in spaced relation about the way 36, where oxidant gas supply requirements are suitable for such low flow rate applications as swimming pools, home drinking water purification, and the like.

Alternate Embodiments of the Invention

Figures 9 and 10 diagrammatically illustrate an alternate lower capacity generator embodiment 12A of the invention in which cell 13A comprises a cabinet 14 and its cover 15, in which the cabinet 14 has suitably affixed to its underside suitable compressor 18 driven by suitable motor 16A, to draw ambient air into inlet 180 and discharge it into conduiting 182 that discharges it at outlet 184 into the chamber 32A that is defined by cabinet 14. As indicated in Figure 9, the chamber 32A is parallelepiped in configuration and has at its mid portion a lamp 61A, forming the photolysis device 60A of generator 12A, mounted to extend thereacross, and between a pair of mounting blocks 74A and 76A that are fixed to the respective sides 184 and 186 of the cabinet 14, as by employing appropriate screw and nut type fasteners 188. The mounting blocks 74A and 76A each have secured thereto stainless steel helical compression springs 72 of the same type disclosed in connection with the apparatus 10 for mounting of the lamp 61A, compression spring style as indicated in Figure 10, with the springs 72 being incorporated in circuiting of the type indicated in Figure 5 for operation of the lamp 10A. Shifting lamp 61A to either side of Figures 9 will effect ready removal and corresponding replacement of lamp 61A in its mounting springs 72. For low capacity requirements lamp 61 and associated parts may be replaced by a replaceable commercially available 13 watt screwable lamp applied to a suitable lamp base socket secured to one of the cabinet sides 184 or 186.

Applied to either side of the chamber 32A is a magnetic rod device 46A on the back side of 190 of the cabinet, and a magnet rod device 46B that is fixed to the cover 15. The rod devices 46A and 46B are the same as shown in connection with the apparatus 10, with the rod device 46B thus in fact being the same as rod device 46A, but having its position reversed in the manner indicated in Figure 2 for the rod devices 46A and 46B there illustrated. The rod devices 46A and 46B of the generator 12A are fixed in place employing suitable clamps 192 secured in place by suitable screw fasteners 194 (omitted in the showing of rod device 46B) secured to cabinet 14 employing suitable screws 153. Cabinet 14 has fitting 200 affixed thereto that serves as the oxidant gas bearing gases flow outlet from chamber 32A, which is connected to the water to be treated in a manner comparable to the apparatus 10.

The compressor motor 16A and the photolysis lamp 61A are connected, for operation of generator 12A into suitable circuiting of the type indicated in Figure 6 (for activation of the generator 12A). The chamber 32A defines a flow way or corridor 36A that functions in a manner similar to that of the apparatus 10, with the magnetic rod devices 46A and 46B providing the permanent magnet flux longitudinally and crosswise of the way that is required and the photolysis lamp 61A providing the ionizing electronvolt ultraviolet wave length emissions that, in combination, transform provide the atmospheric oxygen of the air flow through way 36A to the oxygen allotrope ions that have been referred to, with the generator 12A providing a flow rate at the fitting 200 as needed for the water treatment application to which the generator 12 is to be applied. The capacity can be varied in accordance with requirements by employing a compressor 18 of suitable capacity and a photolysis lamp 61A of suitable capacity, which for low capacity requirements may be as low as 13 watts, with a flow rate from fitting 200 at a level of 0.5 cubic feet per minute.

The embodiment of Figures 11—13 illustrates a generator 12B that is similar to generator 12 but is intended for low capacity applications in which requirements are such that the air flow through the generator may be convection induced by the heat of operation of the photolysis lamp 61B. Generator 12B is of simplified design in which cell 13B comprises cylindrical member or shell 210 that is comparable with casing 30 and receives over its ends the respective coupling members 212 and 214, between which are mounted a pair of magnetic rod devices 46A in diametrically opposed relation on generator 12B, and a magnetic rod device 46B of a shorter length, applied between the two. The devices 46A and 46B have the orientation suggested in Figure 2 insofar as their permanent magnets are concerned. The coupling member 214 is formed with a plurality of atmospheric air inlet ports 216, while the coupling member 212 and sleeve 210 are formed with apertures 218 and 220, respectively, that are aligned in the assembled relation of the generator 12B in which the sleeve ends 222 and 224 seat discs 78 of the respective mounting blocks 74 and 74 against shoulders 223 and 225 of the respective couplings 212 and 214 in the assembled relation of generator 12B, similar to generator 12; in the case of mounting block 76, the disc 78 of same is interposed between shell end 224 and shoulder 225 to mount block 76 in place, with filter pad 102B, that is of the same type as pad 102 of Figure 6, being interposed between the disc 78 of mounting block 76 and ports 216 of coupler member 214, as in well 227. In this embodiment, magnetic devices 46A and 46B are affixed to the generator 12B in the positions indicated in Figure 11, employing angle shaped fittings 230 that are suitably anchored to the respective coupling members 212 and 214 and receiving studs 232 affixed at the ends of the magnetic device casings 48 for this purpose. Cap 234 is threadedly received in internally threaded socket 236 of coupling member to close in the chamber 32B defined by generator 12B, and is removable for removable seating of the upper terminal 66 of lamp 61B in its spring seat contact 72. The apertures 218 and 220 in the assembled relation of the generator 12B are lined up with outlet fitting 238 which in use of the generator 12B is connected to a conduiting 20 and diffuser 22 or their equivalents for diffusing application of the oxidant gas containing air flow from generator 12 into the water to be treated. The shell 210, coupling members 212 and 214 and cap 234 are preferably formed from a suitable grade of polyvinyl chloride, with coupling members 212 and 214 being suitably bonded in place, in the positions indicated on sleeve 210, as by employing a suitable bonding cement. The shell 210 defines between coupling members 212 and 214 a cylindrical body portion of reduced external diameter over which devices 46A and 46B extend, and about which a suitable strap fastener device may be applied to secure generator 12B to an upright support post or the like, in the upright position of Figure 11.

The operation of the generator 12B on energization of the lamp 61B is essentially the same as for the other embodiments of the invention except that the heat provided by the photolysis lamp 61B is relied upon to induce the air flow from the air flow way inlet at apertures 216, through filter pad 102A, through the combined permanent magnet flux fields and photolysis lamp emissions, and thence through the generator outlet defined by apertures 218, 220 and fitting 238, into conduiting that leads to the water to be treated, in a manner comparable to the showing of Figure 5. The generator 12B is devised for relative low oxidant gas flow rate needs, such as for home swimming pools and drinking water treatment, which may be in the range of 0.05-0.1 cubic foot per minute.

While generators 12A and 12B may have their air supply requirements effected by the aforementioned connection to in plant available compressed air systems, these generator embodiments are devised for low capacity use where such compressed air systems are not available.

It will be appreciated from a reading of the foregoing taken in light of the application drawings that the invention provides a number of significant advantages and improvements several of the more important of which are as follows:

The invention contemplates that the agent for purifying water is to have its source in the atmospheric air, namely atmospheric oxygen, with the atmospheric oxygen being processed as part of an atmospheric or ambient air flow through the Applicant's special reactor cell, and specifically the flow way or corridor defined by same, whereby atmospheric oxygen is treated by way of the Applicant's special permanent magnetic fields and photolysis lamp arrangement to transform atmospheric oxygen to highly active and stable oxygen allotrope ions that, by the dipole nature of water, when diffused into the water to be treated in one of the manners herein disclosed, even in the relative low feed rates hereinafter referred to, achieve rapid saturation of the liquid to be treated with the Applicant's oxidant gas treating agent which is thus brought into correspondingly broad oxidizing relation with substances that are oxidizable and are either in solution or entrained in the water flow. The oxidant gas purification provided by the invention serves the same purpose as the various chemical compounds currently available, but avoids the problems of having these various types of chemical compounds in the water, their various side effects, and the like. All matter, including matter which is oxidizable, if contained in the water being treated, is subject to the oxidizing action of the Applicant's oxidant gases. The water tension of the water is also reduced to permit settling out of solids that are not in solution but are entrapped perhaps in fine form in the water molecule bonds. The application of the invention is especially suited for disinfection, descaling, detoxification, and general purification of water.

Special aspects of the invention are that the source of the invention agent for purifying water, namely ambient atmospheric air, is unlimited, and, as indicated, the presence in the Applicant's oxidant gas generators of the magnetic field makes the flow way or corridor self cleaning for the length of the photolysis lamp. Thus, the Applicant's generator oxidant gas supply function continues with no decrease and unabated during the entire period of operation due to the continual and unabated source of supply of atmospheric air, and the self cleaning action the Applicant's magnetic fields have on the photolysis lamp.

In terms of results, the application of the Applicant's oxidant gas to the water being treated has been found to reduce surface tension in the water, by breaking of the hydrogen bond between water molecules, and this enhances agglomeration of colloidal solid particles into larger size (for settling and filtering out), as well as effects oxidative discontamination of organic debris and disinfection of bacteria, fungus, and virus. Also, pH stabilization and buffering is effected due to formation of hydroxlation (OH)⁻ ion byproducts from oxidation reactions. These agglomeration and pH stabilization and buffering effects are believed to be new for water treatment developments.

The foregoing description and the drawings are given merely to explain and illustrate the invention and the invention is not to be limited thereto, except insofar as the appended claims are so limited, since those skilled in the art who have the disclosure before them will be able to make modifications and variations therein without departing from the scope of the claims.

## Claims

1. An oxidant gas generator for receiving an air flow from the ambient air, converting atmospheric oxygen contained in the ambient air flow to oxidant gas in the form of ionized gaseous oxygen allotropes, and discharging the air flow therefrom for application to liquids to be treated thereby, on a uniform and uninterrupted basis, said generator 12 comprising:

a housing 30 defining a fluid flow chamber 32 formed by a non magnetic material and forming an air flow way 36 for the ambient air flow having an inlet 38 and an outlet 40 therealong,

with said inlet 38 being open to the ambient air,

said air flow way 36 between said inlet and said outlet having a site 44 for effecting said conversion of atmospheric oxygen of the ambient air flow,

said site 44 including:

magnetic means 46 of fixed intensity defining multiple north-south magnetic polar relations having varient orientations for forming multiple magnetic flux fields of which the magnetic lines of force therefrom are connected within and are interlaced across and along the air flow way at said site,

and an elongate mercury vapor photolysis lamp 61 mounted to be disposed in said site within said flow way and said magnetic flux fields for generating, when said lamp is energized; ionizing ultraviolet light therealong and substantially 360 degrees thereabout,

means 62 for electrically energizing said lamp for enveloping said flux fields and said lines of force thereof with ultraviolet light electron-volt energy emissions from said lamp,

and means 18 for inducing flow of ambient air from the atmosphere through said flow way,

whereby when said lamp is energized by said energizing means, said lamp effects said ultraviolet light electron-volt energy emissions radially about said lamp in enveloping relation to said flux fields,

and on said flow of ambient air from the atmosphere being induced through said ambient air flow path and said site thereof, at said site atmospheric oxygen of the ambient air flow, as such atmospheric oxygen moves through said site, is subject to conversion to ionized gaseous, oxygen allotropes of highly energized characteristics, under the cooperative effects of said flux fields enveloped by said ultraviolet light electron-volt energy emissions from said lamp to the exclusion of the air flow nitrogen content, for discharge as said oxidant gas as part of the air flow discharge from said air flow way outlet,

said magnetic means flux fields thereby being oriented in magnetically acting to said lamp for maintaining said lamp free of foreign material, ultraviolet light blocking, buildups on said lamp, and effecting concentration of said oxidant gas, of the ambient air flow, at said site for prolonging conversion treatment time of the atmospheric oxygen content of said air flow therethrough for increased oxidising potential of said oxidant gas contained in the air flow discharge from said air flow way outlet.

2. The oxidant gas generator set forth in claim 1 wherein:

said magnetic means flux fields are defined by a plurality of elongate magnet devices 46 each comprising a casing 48 formed from a non magnetic material and containing therealong a series of elongate permanent magnets 50 in spaced apart, longitudinally aligned, alternating north to south pole relation, with consecutive magnets of the respective casings being separated by non magnetic bodies 52,

said casings 48 being positioned and oriented relative to said site 44 to provide said site interlacing lines of force.

3. The oxidant gas generator set forth in claim 1 wherein:

said ambient air flow inducing means comprises means for mechanically inducing the air flow through said flow way.

4. The oxidant gas generator set forth in claim 1 wherein:

said ambient air flow inducing means comprises said flow way outlet being disposed above said flow way inlet,

said lamp 61 heating the air within said flow way site 44 to effect convection flow of said air flow through said ambient air flow way 36,

5. The oxidant gas generator set forth in claim 1 including:

means 116 for recycling a portion of the ambient air flow from said outlet 40 back into said way 36 at said site 44.

6. The oxidant gas generator set forth in claim 1 wherein:

said chamber 32 is generally parallelepiped in configuration,

with said magnetic means flux fields being formed by a least one permanent magnet device 50 mounted in said chamber.

7. The oxidant gas generator set forth in claim 1 wherein:

said chamber 32 is generally cylindrical in configuration,

with said magnetic means flux fields being formed by at least one elongate permanent magnet device 50 mounted to extend longitudinally of said chamber,

said lamp 61 extending longitudinally of said way and being substantially centered within said chamber.

8. The oxidant gas generator set forth in claim 1 including:

means 22 for interspersing the ambient air flow from said outlet 40 into liquid to be treated thereby, including conduit means connected between said outlet and said interspersing means.

9. Apparatus for chemical free water purification treatment utilizing atmospheric origin oxygen, said apparatus comprising:

a housing 30 defining a fluid flow chamber 32 formed by a non magnetic material and forming an air flow way 36 for the ambient air flow having an inlet 38 and an outlet 40 therealong,

said inlet 38 being open to the ambient air,

said air flow way 36 between said inlet and said outlet having a site 44 for effecting said conversion of atmospheric oxygen of the ambient air flow to oxidant gas in the form of ionized gaseous oxygen allotropes,

said site 44 including:

magnetic means 46 of fixed intensity defining multiple north-south magnetic polar relations having varient orientations for forming multiple magnetic flux fields of which the magnetic lines of force therefrom are concentrated within and are interlaced across and along the air flow way at said site,

and a mercury vapor photolysis lamp 61 mounted to be disposed in said site within said flow way and said magnetic flux fields for generating, when said lamp is energized ionizing ultraviolet light therealong and substantially 360 degrees thereabout,

means 62 for electrically energizing said lamp for enveloping said flux fields and said flux lines of force thereof with ultraviolet light electron-volt energy emissions from said lamp,

and means 18 for inducing flow of ambient air from the atmosphere through said flow way,

whereby when said lamp is energized by said energizing means, said lamp effects said ultraviolet light electron-volt energy emissions radially about said lamp in enveloping relation to said flux fields,

and on said flow of ambient air from the atmosphere being induced through said ambient flow path and said site thereof, at said site atmospheric oxygen of the ambient air flow, as such atmosphere oxygen moves through said site, is subject to conversion to ionized, gaseous, oxygen allotropes of highly energized characteristics, under the cooperative effects of said flux fields enveloped by said ultraviolet light electron-volt energy emissions from said lamp to the exclusion of the air flow nitrogen content, for discharge as said oxidant gas as part of the air flow discharge from said air flow way outlet,

said magnetic means flux fields thereby being oriented in magnetically acting relation to said lamp for maintaining said lamp free of foreign material, ultraviolet light blocking, buildups on said lamp, and effecting concentration of said oxidant gas, of the ambient air flow, at said site for prolonging conversion treatment time of the atmospheric oxygen content of said air flow therethrough for increased oxidizing potential of said oxidant gas contained in the air flow discharge from said air flow way outlet,

and means 22 for interspersing the ambient air flow from said outlet, including said oxidant gas, into the water to be treated including:

means 164 for diffusing the air flow into the water to be treated,

and conduit means connected between said outlet and said diffusing means for conducting the air flow from said way to said diffusing means.

10. The apparatus set forth in claim 9 wherein:

said magnetic flux fields are defined by a plurality of elongate magnet devices 46 each comprising a casing 48 formed from a non magnetic material and containing therealong a series of elongate permanent magnets 50 in spaced apart, longitudinally aligned, alternating north to south pole relation, with consecutive magnets of the respective casings being separated by non magnetic bodies 52,

said casings 48 being positioned and oriented relative to said site 44 to produce said site interlacing lines of force.

11. The apparatus set forth in claim 9 wherein:

said ambient air flow inducing means 18 comprises means for mechanically inducing the air flow through said flow way.

12. The apparatus set forth in claim 9 wherein:

said ambient air flow inducing means 18 comprises said flow way outlet being disposed above said flow way inlet,

said lamp 61 heating the air within said flow way site to effect convection flow of said air flow through said ambient air flow way.

13. The apparatus set forth in claim 9 including:

means 116 for recycling a portion of the ambient air flow from said outlet back into said way at said site.

14. The apparatus set forth in claim 9 wherein:

said chamber 32 is generally parallelepiped in configuration,

with said magnetic flux fields being formed by at least one permanent magnet device mounted in said chamber.

15. The apparatus set forth in claim 9 wherein:

said chamber 32 is generally cylindrical in configuration,

with said magnetic flux field being formed by at least one elongate permanent magnet device 50 mounted to extend longitudinally of said chamber,

said lamp 61 extending longitudinally of said way and being substantially centered within said chamber.

16. The method of treating a flow stream of ambient air to convert atmospheric oxygen in same to ionized gaseous oxygen allotrope oxidant gas that remains in the air flow stream, which method comprises:

establishing a gas flow path 36 for the air flow stream and an ionized oxygen allotrope forming site 44 in same that includes multiple magnetic flux fields of fixed intensity characterized by multiple north-south magnetic polar relations having varient orientations of which the magnetic lines of force therefrom are connected within and are interlaced across and along the path at the site,

enveloping the flux fields from a source within the flow path at the site with ultraviolet wave length electron-volt emissions having oxygen ionizing characteristics,

continuously passing the ambient air flow stream from an ambient air source through the gas flow path including said site while using the magnetism of said flux fields to concentrate atmospheric oxygen in the flow stream at the site and shielding the electron-volt emissions source from blockage,

converting at said site the atmospheric oxygen of the flow stream passing therethrough into oxygen allotrope ions by photo bombarding of same in the presence of said flux fields to form the oxidant gas of the air flow stream, while simultaneously passing the atmospheric nitrogen of the flow stream through the site free from chemical change,

and continuously passing the flow stream, including the converted atmospheric oxygen in gaseous form, from the gas flow path.

17. The method of water purification treatment which includes the steps of claim 16 and thereafter,

diffusing the flow stream into the water to be treated,

whereby the resulting oxygen allotrope ions of the flow stream are attracted to the water molecules of the water by way of their dipole electrical nature and thence into oxidizing relation with foreign material in the water, to effect, using the converted atmospheric oxygen, reduction of the surface tension of the water and thereby enhancing agglomeration of colloidal solids therein for settling out therefrom, oxidising the foreign material remaining in the water, and stabilizing and buffering of the water pH.

**Patentansprüche**

1. Generator für oxidierendes Gas, der einen Luftstrom aus der Umgebungsluft aufnimmt, in diesem enthaltenden atmosphärischen Sauerstoff in oxidierendes Gas in Form ionisierter gasförmiger Sauerstroff-Allotrope umwandelt und den Luftstrom auf einer gleichförmigen und ununterbrochenen Basis für eine Anwendung auf Flüssigkeiten abgibt, die hierdurch behandelt werden sollen, wobei der Generator (12)

ein Gehäuse (30) aufweist, das eine Fluid-Strömungskammer (32) festlegt, die aus nichtmagnetischem Material besteht und einen Luftströmungsweg (36) für den Umgebungsluft-Strom bildet, längs dessen ein Einlaß (38) und ein Auslaß (40) vorgesehen sind,

wobei der Einlaß (38) zur Umgebungsluft offen ist, und

der Luftströmungsweg (36) zwischen dem Einlaß und dem Auslaß eine Stelle (44) zur Umwandlung des atmosphärischen Sauerstoffs des Umgebungsluft-Stroms aufweist, und

wobei diese Stelle (44) folgende Bestandteile umfaßt:

eine Magneteinrichtung (46) mit festgelegter Intensität, die eine Vielzahl von magnetischen Nordpol-Südpol-Beziehungen mit unterschiedlichen Ausrichtungen definiert, um eine Vielzahl von Magnetflußfeldern zu bilden, deren magnetische Kraftlinien an dieser Stelle im Luftströmungsweg konzentriert und quer zu diesem und in dessen Längsrichtung verkettet sind, und

eine langgestreckte Quecksilberdampf-Photolyselampe (61), die so montiert ist, daß sie an dieser Stelle in dem Strömungsweg und den Magnetflußfeldern angeordnet ist, um dann, wenn sie eingeschaltet ist, über ihre Länge hinweg und im wesentlichen in einem Umkreis von 360° ionisierendes ultraviolettes Licht zu erzeugen, und

wobei der Generator ferner

Einrichtungen (62) zur Versorgung der Lampe mit elektrischer Energie, um die Flußfelder und deren Kraftlinien mit ultravioletten Licht-Elektronenvolt-Energie-Emissionen von dieser Lampe einzuhüllen,

sowie Mittel (18) zur Erzeugung einer Strömung von Umgebungsluft aus der Atmosphäre durch den Strömungsweg aufweist, wodurch die Lampe dann, wenn sie durch die Energieversorgungseinrichtungen mit Energie versorgt wird, die ultravioletten Licht-Elektronenvolt-Energie-Emissionen radial um sich herum in einer umhüllenden Relation zu den Flußfeldern erzeugt, und

wodurch in diesem aus der Atmosphäre stammenden Umgebungsluft-Strom, der durch den Umgebungsluft-Strömungsweg und dessen besagte Stelle hindurch erzeugt wird, an dieser Stelle sich durch sie hindurchbewegender atmosphärischer Sauerstoff des Umgebungsluftstroms einer Umwandlung in ionisierte, gasförmige Sauerstoff-Allotrope mit hochenergetischen Eigenschaften unter den Mitwirkungseffekten der Flußfelder unterworfen wird, die von den ultravioletten Licht-Elektronenvolt-Energie-Emissionen der Lampe umhüllt sind, ohne daß es zu einer Beeinflussung des Stickstoffgehaltes des Luftstromes kommt, um als oxidierendes Gas als Teil des aus dem Auslaß des Luftströmungsweges ausfließendes Luftstroms auszutreten,

wobei die Flußfelder der Magneteinrichtung in magnetisch wirksamer Weise bezüglich der Lampe so orientiert sind, daß sie die Lampe frei von Ablagerungen auf dieser halten, die aus Fremdmaterial bestehen und das ultraviolette Licht blockieren, und wobei die Flußfelder eine Konzentration des oxidierenden Gases des Umgebungsluftstroms an der erwähnten Stelle bewirken, um die Umwandlungs-Behandlungszeit des atmosphärischen Sauerstoffgehaltes des hindurchströmenden Luftstromes zu verlängern und ein erhöhtes Oxidationspotential des oxidierenden Gases zu erzielen, das in dem aus dem Auslaß des Luftströmungsweges austretenden Luftstrom enthalten ist.

2. Generator für oxidierendes Gas nach Anspruch 1, dadurch gekennzeichnet, daß die Flußfelder der Magneteinrichtung durch eine Vielzahl von langgestreckten Magnetvorrichtungen (46) festgelegt sind, von denen jede ein Gehäuse (48) umfaßt, das aus einem nichtmagnetischen Material besteht und eine Reihe von langgestreckten Permanentmagneten (50) enthält, die längs des Gehäuses voneinander im Abstand und in Längsrichtung ausgerichtet und mit wechselnder Nord-Süd-Pol-Beziehung angeordnet sind, wobei aufeinanderfolgende Magnete des jeweiligen Gehäuses durch nichtmagnetische Elemente (52) getrennt sind, und daß die Gehäuse (48) bezüglich der Stelle (44) so positioniert und ausgerichtet sind, daß sie die verketteten Kraftlinien dieser Stelle bilden.

3. Generator für oxidierendes Gas nach Anspruch 1, dadurch gekennzeichnet, daß die Mittel zur Erzeugung des Umgebungsluft-Stroms eine Einrichtung zur mechanischen Erzeugung des Luftstroms durch den Strömungsweg umfassen.

4. Generator für oxidierendes Gas nach Anspruch 1, dadurch gekennzeichnet, daß die Mittel zur Erzeugung des Umgebungsluft-Stroms umfassen, daß der Auslaß des Strömungswegs oberhalb des Einlasses des Strömungswegs angeordnet ist, wobei die Lampe (61) die Luft an besagter Stelle (44) des Strömungsweges erhitzt, um eine Konvektionsströmung des Luftstroms durch den Umgebungsluft-Strömungsweg (36) zu bewirken.

5. Generator für oxidierendes Gas nach Anspruch 1, dadurch gekennzeichnet, daß er Mittel (116) zum Zurückführen eines Teils des aus dem Auslaß (40) austretenden Umgebungsluft-Stroms an besagter Stelle (44) in den Weg (36) umfaßt.

6. Generator für oxidierendes Gas nach Anspruch 1, dadurch gekennzeichnet, daß die Kammer (32) im wesentlichen eine parallelepipedische Form aufweist, und daß die von magnetischen Mitteln stammenden Flußfelder von wenigstens einer Permanentmagnetanordnung (50) erzeugt werden, die in der Kammer montiert ist.

7. Generator für oxidierendes Gas nach Anspruch 1, dadurch gekennzeichnet, daß die Kammer (32) eine im wesentlichen zylindrische Form besitzt, und daß die von magnetischen Mitteln stammenden Flußfelder von wenigstens einer langgestreckten Permanentmagnet-Anordnung (50) erzeugt werden, die so montiert ist, daß sie sich in Längsrichtung der Kammer erstreckt, wobei sich die Lampe (61) in Längsrichtung des Weges erstreckt und im wesentlichen zentrisch in der Kammer angeordnet ist.

8. Generator für ein oxidierendes Gas nach Anspruch 1, dadurch gekennzeichnet, daß er Mittel (22) umfaßt, die dazu dienen, den aus dem Auslaß (40) austretenden Umgebungsluftstrom mit der zu behandelnden Flüssigkeit zu vermischen, und daß Leitungseinrichtungen vorgesehen sind, die zwischen dem Auslaß und der Mischeinrichtung angeschlossen sind.

9. Vorrichtung zur nichtchemischen Wasser-Reinigungsbehandlung unter Verwendung von Sauerstoff atmosphärischen Ursprungs mit:
einem Gehäuse (30), das eine Fluid-Strömungskammer (32) festlegt, die aus nichtmagnetischem Material besteht und einen Luftströmungweg (36) für den Umgebungsluft-Strom bildet, längs dessen ein Einlaß (38) und ein Auslaß (40) vorgesehen sind,

wobei der Einlaß (38) zur Umgebungsluft offen ist, und der Luftströmungsweg (36) zwischen dem Einlaß und dem Auslaß eine Stelle (44) zur Umwandlung von atmosphärischem Sauerstoff des Umgebungsluft-Stroms in ein oxidierendes Gas in Form von ionisierten gasförmigen Sauerstoff-Allotropen umfaßt, und

diese Stelle (44) eine Magneteinrichtung (46) mit festgelegten Intensität, die eine Vielzahl von magnetischen Nordpol-Südpol-Beziehungen mit unterschiedlichen Ausrichtungen zur Ausbildung einer Vielzahl von Magnetflußfeldern definiert, deren magnetische Kraftlinien an dieser Stelle im Luftströmungsweg konzentriert und quer zu diesem sowie in dessen Längsrichtung verkettet sind,

einer Quecksilberdampf-Photolyselampe (61), die so montiert ist, daß sie an besagter Stelle im Strömungsweg und den Magnetflußfeldern angeordnet ist, um dann, wenn sie eingeschaltet ist, über ihre Länge hinweg und im wesentlichen in einem Umkreis von 360° ionisierendes ultraviolettes Licht zu erzeugen,

sowie Einrichtungen (62) zur Versorgung der Lampe mit elektrischer Energie, um die Flußfelder und deren Flußkraftlinien mit ultravioletten Licht-Elektronenvolt-Energie-Emissionen von dieser Lampe einzuhüllen, und

ferner mit Mitteln (18) zur Erzeugung einer Strömung von Umgebungsluft aus der Atmosphäre durch den Strömungsweg aufweist, wodurch die Lampe dann, wenn sie durch die Energieversorgungseinrichtungen mit Energie versorgt wird, die ultravioletten Licht-Elektronenvolt-Energie-Emissionen radial um sich herum in einer umhüllenden Relation zu den Flußfeldern erzeugt,

und wodurch
in diesem Umgebungsluftstrom aus der Atmosphäre, der durch den Umgebungsluft-Strömungsweg und dessen besagte Stelle hindurch erzeugt wird, an dieser Stelle sich durch diese Stelle hindurchbewegender atmosphärischer Sauerstoff des Umgebungsluftstroms einer Umwandlung in ionisierte, gasförmige Sauerstoff-Allotrope mit hochenergetischen Eigenschaften unter den Mitwirkungseffekten der Flußfelder unterworfen wird, die von den ultravioletten Licht-Elektronenvolt-Emissionen der Lampe umhüllt sind, ohne daß es zu einer Beeinflussung des Stickstoffgehaltes des Luftstroms kommt, um als oxidierendes Gas als Teil des aus dem Auslaß des Luftströmungsweges ausfließenden Luftstroms auszutreten,

wobei die Flußfelder der Magneteinrichtung in magnetisch wirksamer Weise bezüglich der Lampe so orientiert sind, daß sie die Lampe frei von Ablagerungen halten, die aus Fremdmaterial bestehen und das ultraviolette Licht blockieren, und wobei die Flußfelder eine Konzentration des oxidierenden Gases des Umgebungsluftstroms an besagter Stelle bewirken, um die Umwandlungs-Behandlungszeit des atmosphärischen Sauerstoffgehaltes des hindurchströmenden Luftstroms zu verlängern und ein erhöhtes Oxidationspotential des oxidierenden Gases zu erzielen, das in dem aus dem Auslaß des Luftströmungsweges austretenden Luftstrom enthalten ist, und Mittel (22) zum Vermischen des aus dem Auslaß austretenden, das oxidierende Gas enthaltenden Umgebungsluftstroms mit dem zu behandelnden Wasser wobei Einrichtungen (164) vorgesehen sind, um den Luftstrom in das zu behandelnde Wasser hineinzudiffundieren,

sowie Leitungen, die zwischen dem Auslaß und der Diffusionsanordnung angeschlossen sind, um den Luftstrom von dem Weg zur Diffusionsanordnung zu leiten.

10. Vorrichtung nach Anspruch 9, dadurch gekennzeichnet, daß die Flußfelder der Magneteinrichtung durch eine Vielzahl von langgestreckten Magnetvorrichtungen (46) definiert sind, von denen jede ein Gehäuse (48) umfaßt, das aus einem nichtmagnetischen Material besteht und eine Reihe von langgestreckten Permanentmagneten (50) enthält, die längs des Gehäuses voneinander im Abstand und in Längsrichtung ausgerichtet mit wechselnder Nord-Süd-Pol-Beziehung angeordnet sind, wobei aufeinanderfolgende Magnete des jeweiligen Gehäuses durch nichtmagnetische Elemente (52) getrennt sind, und daß die Gehäuse (48) bezüglich der Stelle (44) so positioniert und ausgerichtet sind, daß sie die verketteten Kraftlinien dieser Stelle bilden.

11. Vorrichtung nach Anspruch 9, dadurch gekennzeichnet, daß die Mittel (18) zur Erzeugung des Umgebungsluft-Stroms eine Einrichtung zur mechanischen Erzeugung des Luftstroms durch den Strömungsweg umfassen.

12. Vorrichtung nach Anspruch 9, dadurch gekennzeichnet, daß die Mittel (18) zur Erzeugung des Umgebungsluft-Stroms umfassen, daß der Auslaß des Strömungswegs oberhalb des Einlasses des Strömungswegs angeordnet ist, wobei die Lampe (61) die Luft an der besagten Stelle des Strömungsweges erhitzt, um eine Konvektionsströmung des Luftstroms durch den Umgebungsluft-Strömungsweg zu bewirken.

13. Vorrichtung nach Anspruch 9, dadurch gekennzeichnet, daß sie Mittel (116) umfaßt, die dazu dienen, einen Teil des Umgebungsluft-Stroms, der aus dem Auslaß austritt, in den Weg an besagter Stelle zurückzuführen.

14. Vorrichtung nach Anspruch 9, dadurch gekennzeichnet, daß die Kammer (32) eine im wesentlichen parallelepipedische Form aufweist, und daß die von magnetischen Mitteln stammenden Flußfelder von wenigstens einer Permanentmagnetanordnung erzeugt werden, die in der Kammer montiert ist.

15. Vorrichtung nach Anspruch 9, dadurch gekennzeichnet, daß die Kammer (32) eine im wesentlichen zylindrische Form besitzt, und daß die von magnetischen Mitteln stammenden Flußfelder von wenigstens einer langgestreckten Permanentmagnet-Anordnung (50) erzeugt werden, die so montiert ist, daß sie sich in Längsrichtung der Kammer erstreckt, wobei sich die Lampe (61) in Längsrichtung des Weges erstreckt und im wesentlichen zentrisch in der Kammer angeordnet ist.

16. Verfahren zum Behandeln eines Strömungsflusses von Umgebungsluft zum Umwandeln von darin enthaltenem atmosphärischem Sauerstoff in ein Oxidationsgas, das ionisierte gasförmige Sauerstoff-Allotrope enthält und im Strömungsfluß verbleibt, wobei das Verfahren folgende Schritte umfaßt:

Ausbildung eines Gasströmungsweges (36) für den Luftströmungsfluß und einer in diesem Strömungsweg befindlichen Bildungsstelle (44) für ionisierte Sauerstoff-Allotrope, die eine Vielzahl von Magnetflußfeldern mit vorgegebener Intensität umfaßt, die durch eine Vielzahl von magnetischen Nord-Süd-Pol-Relationen gekennzeichnet sind, die verschiedene Ausrichtungen aufweisen und deren magnetische Kraftlinien an dieser Stelle konzentriert und quer sowie längs zum Pfad verkettet sind,

Einhüllen der aus einer Quelle innerhalb des Strömungsweges stammenden Flußfelder an besagter Stelle mit Elektronenvolt-Emissionen mit ultravioletter Wellenlänge, welche die Eigenschaft besitzen, Sauerstoff zu ionisieren,

Erzeugen eines aus einer Umgebungsluftquelle stammenden kontinuierlichen Umgebungsluft-Stroms durch den Gasströmungsweg, der besagte Stelle umfaßt, wobei die magnetische Wirkung der Flußfelder zur Konzentration des atmosphärischen Sauerstoffs im Strömungsfluß an besagter Stelle und zur Abschirmung der Elektronenvolt-Emissionsquelle gegen eine Blockierung eingesetzt wird,

an besagter Stelle Umwandeln des atmosphärischen Sauerstoffs des durch sie hindurchströmenden Strömungsflusses in Sauerstoff-Allotrop-Ionen durch eine Photo-Bombardierung des Sauerstoffs in Anwesenheit der Flußfelder zur Erzeugung des oxidierenden Gases aus dem Luftströmungsfluß, wobei gleichzeitig der atmosphärische Stickstoff des Strömungsflusses diese Stelle frei von chemischen Veränderungen passiert, und

kontinuierliches Abziehen des Strömungsflusses, der den umgewandelten atmosphärischen Sauerstoff in Gasform enthält, vom Gas-Strömungsweg.

17. Verfahren zur Wasser-Reinigungsbehandlung, das die Schritte nach Anspruch 16 enthält und bei dem danach der Strömungsfluß in das zu behandelnde Wasser eingeleitet wird, wodurch die sich ergebenden Sauerstoff-Allotrop-Ionen des Strömungsflusses zu den Wassermolekülen des Wassers aufgrund deren elektrischer Dipol-Eigenschaften und somit in eine oxidierende Relation mit fremdem Material im Wasser hingezogen werden, wodurch unter Verwendung des umgewandelten atmosphärischen Sauerstoffs eine Verminderung der Oberflächenspannung des Wassers bewirkt und dadurch die Zusammenballung von kolloidalen Feststoffen im Wasser zu deren Ausfällung aus diesem erhöht wird, und wobei das im Wasser verbleibende Fremdmaterial oxidiert und der pH-Wert des Wassers stabilisiert und abgepuffert wird.

**Revendications**

1. Générateur de gaz oxydant pour recevoir un écoulement d'air de l'air ambiant, convertir l'oxygène atmosphérique contenu dans l'écoulement d'air ambiant en un gaz oxydant sous la forme d'allotropes d'oxygène gazeux ionisé et décharger l'écoulement d'air pour l'appliquer à des liquides à traiter par cet oxygène, sur une base uniforme et non interrompue,

le générateur 12 comprenant:

un boîtier 30 définissant une chambre d'écoulement de fluide 32 formée par une matière non magnétique et formant un trajet d'écoulement d'air 36 pour l'écoulement de l'air ambiant, ayant une entrée 38 et une sortie 40 le long de ce trajet,

l'entrée 38 étant ouverte vert l'air ambiant,

le trajet d'écoulement d'air 36 entre l'entrée et la sortie comportant un site 44 pour effectuer ladite conversion de l'oxygène atmosphérique de l'écoulement d'air ambiant,

le site 44 comprenant:

des moyens magnétiques 46 d'une intensité fixe définissant des relations multiples polaires magnétiques nord-sud ayant des orientations variables pour former des champs magnétiques multiples de flux dont les lignes magnétiques de force qui en partent sont concentrées dans le trajet d'écoulement d'air au niveau du site et sont entrelacées en travers du trajet et le long de celui-ci, et

une lampe 61 de photolyse allongée, à vapeur de mercure, montée de façon à être disposée dans le site à l'intérieur du trajet de l'écoulement et des champs magnétiques de flux pour produire, lorsque la lampe est excitée, une lumière ultraviolette d'ionisation le long de la lampe et sensiblement à 360 degrés autour d'elle,

des moyens 62 pour exciter électriquement la lampe afin d'envelopper les champs de flux et les lignes de force de ceux-ci par des émissions d'énergie de lumière ultraviolette en électrons-volts en provenance de la lampe, et

des moyens 18 pour induire un écoulement de l'air ambiant de l'atmosphère à travers le trajet d'écoulement,

de sorte que, lorsque la lampe est excitée par les moyens d'excitation, elle effectue lesdites émissions d'énergie de lumière ultraviolette en électrons-volts radialement autour de la lampe dans une relation d'enveloppement par rapport aux champs de flux, et

lorsque l'écoulement de l'air ambiant en provenance de l'atmosphère est induit par le trajet d'écoulement d'air ambiant et ledit site, au niveau dudit site, l'oxygène atmosphérique de l'écoulement d'air ambiant, à mesure que l'oxygène atmosphérique se déplace à travers le site, est soumis à une conversion en des allotropes d'oxygène gazeux ionisé ayant des caractéristiques de grande énergie, sous les effets coopératifs des champs de flux enveloppés par les émissions d'énergie de lumière ultraviolette en électrons-volts en provenance de la lampe, à l'exclusion de la proportion d'azote d'écoulement d'air, pour effectuer une décharge en tant que gaz oxydant et en tant que partie de la décharge d'écoulement d'air en provenance de la sortie du trajet d'écoulement d'air,

les champs de flux des moyens magnétiques étant orientés dans une relation d'action magnétique par rapport à la lampe afin de maintenir cette lampe exempte de matière étrangère, de blocage de lumière ultraviolette, d'accumulations sur la lampe, et pour effectuer une concentration du gaz oxydant, de l'écoulement d'air ambiant, au niveau du site afin de prolonger le temps de traitement de conversion de la proportion en oxygène atmosphérique de l'écoulement d'air à travers celui-ci, afin d'augmenter le potentiel d'oxydation du gaz oxydant contenu dans la décharge d'écoulement d'air en provenance de la sortie du trajet d'écoulement d'air.

2. Générateur de gaz oxydant selon la revendication 1, dans lequel:

les champs de flux des moyens magnétiques sont définis par plusieurs dispositifs allongés à aimants 46 dont chacun comprend un boîtier 48 formé à partir d'une matière non magnétique et contenant le long de celui-ci une série d'aimants permanents allongés 50 dans une relation espacée, d'alignement longitudinal et de pôles nord-sud alternés, les aimants consécutifs des boîtiers respectifs étant séparés par des corps non magnétiques 52,

les boîtiers 48 étant placés et orientés par rapport au site 44 de façon à donner au site des lignes de force entrelacées.

3. Générateur de gaz oxydant selon la revendication 1, dans lequel les moyens d'induction de l'écoulement d'air ambiant comprennent des moyens pour induire mécaniquement un écoulement d'air à travers le trajet d'écoulement.

4. Générateur de gaz oxydant selon la revendication 1, dans lequel les moyens d'induction de l'écoulement d'air ambiant comprennent la sortie du trajet d'écoulement, disposée au-dessus de l'entrée du trajet de l'écoulement, la lampe 61 chauffant l'air à l'intérieur du site 44 de trajet d'écoulement pour effectuer un écoulement de convection de l'écoulement d'air à travers le trajet d'écoulement d'air ambiant 36.

5. Générateur de gaz oxydant selon la revendication 1, comprenant des moyens 116 pour recycler une partie de l'écoulement d'air ambiant en provenance de la sortie 40 pour la reconduire dans le trajet 36 au niveau du site 44.

6. Générateur de gaz oxydant selon la revendication 1, dans lequel la chambre 32 est d'une configuration globalement parallélépipédique, les champs de flux des moyens magnétiques étant formés par au moins un dispositif à aimants permanents 50 monté dans la chambre.

7. Générateur de gaz oxydant selon la revendication 1, dans lequel la chambre 32 a une configuration globalement cylindrique, les champs de flux des moyens magnétiques étant formés par au moins un dispositif 50 à aimants permanents allongé monté de façon à s'étendre longitudinalement par rapport à la chambre, la lampe 61 s'étendant longitudinalement par rapport au trajet étant sensiblement centrée à l'intérieur de la chambre.

8. Générateur de gaz oxydant selon la revendication 1, comprenant des moyens 22 pour interposer l'écoulement d'air ambiant en provenance de la sortie 40 dans le liquide qu'il doit traiter, y compris des moyens à conduites reliés entre la sortie et les moyens d'interposition.

9. Appareil de traitement, pour une purification d'eau exempte de produits chimiques, utilisant l'oxygène d'origine atmosphérique,

ledit appareil comprenant:

un boîtier 30 définissant une chambre 32 d'écoulement de fluide formée par une matière non magnétique et formant un trajet d'écoulement d'air 36 pour l'écoulement d'air ambiant ayant une entrée 38 et une sortie 40 le long du trajet,

l'entrée 38 étant ouverte à l'air ambiant,

le trajet d'écoulement d'air 36 entre l'entrée et la sortie comportant un site 44 pour effectuer la conversion de l'oxygène atmosphérique de l'écoulement d'air ambiant en gaz oxydant sous forme d'allotropes d'oxygène gazeux ionisé,

le site 44 comprenant:

des moyens magnétiques 46 d'intensité fixe définissant des relations multiples polaires magnétiques nord-sud ayant des orientations variables pour former des champs multiples magnétiques de flux dont les lignes magnétiques de force en provenance de ceux-ci sont concentrées à l'intérieur du trajet d'écoulement d'air au niveau du site et sont entrelacées en travers de celui-ci et le long de celui-ci, et

une lampe 61 de photolyse à vapeur de mercure montée de façon à être disposée dans ledit site à l'intérieur du trajet de l'écoulement et des champs de flux magnétiques pour produire, lorsque la lampe est excitée, une lumière ultraviolette d'ionisation le long de la lampe et sensiblement à 360 degrés autour d'elle,

des moyens 62 pour exciter électriquement la lampe afin d'envelopper les champs de flux et leurs lignes de flux de force avec des émissions d'énergie de lumière ultraviolette en électrons-volts en provenance de la lampe, et

des moyens 18 pour induire un écoulement d'air ambiant en provenance de l'atmosphère à travers le trajet d'écoulement,

de sorte que, lorsque la lampe est excitée par les moyens d'excitation, elle effectue lesdites émissions d'énergie de lumière ultraviolette en électrons-volts radialement autour de la lampe dans une relation d'enveloppement par rapport aux champs de flux, et

lorsque l'écoulement de l'air ambiant provenant de l'atmosphère est induit à travers le trajet d'écoulement ambiant et le site, au niveau du site, l'oxygène atmosphérique de l'écoulement d'air ambiant, à mesure que l'oxygène de l'atmosphère se déplace à travers le site, est soumis à une conversion en des allotropes d'oxygène gazeux ionisé ayant des caractéristiques d'énergie élevées, sous les effets coopératifs des champs de flux enveloppés par des émissions d'énergie de lumière ultraviolette en électrons-volts en provenance de la lampe, à l'exclusion de la proportion d'azote d'écoulement d'air, pour réaliser une décharge en tant que gaz oxydant et en temps que partie de la décharge d'écoulement d'air en provenance de la sortie du trajet d'écoulement d'air,

les champs de flux des moyens magnétiques étant orientés dans une relation à action magnétique par rapport à la lampe pour maintenir ladite lampe sans matières étrangères, sans blocage de la lumière ultraviolette, et sans accumulations sur la lampe, et pour effectuer une concentration du gaz oxydant, de l'écoulement de l'air ambiant, au niveau du site afin de prolonger le temps de traitement de conversion de la quantité d'oxygène atmosphérique de l'écoulement d'air à travers celui-ci, pour augmenter le potentiel d'oxydation du gaz oxydant contenu dans la décharge d'écoulement d'air en provenance de la sortie du trajet d'écoulement d'air, et

des moyens 22 pour interposer l'écoulement d'air ambiant en provenance de la sortie, y compris le gaz oxydant, dans l'eau à traiter comprenant:

des moyens 164 pour diffuser l'écoulement d'air dans l'eau à traiter, et

des moyens à conduites reliés entre la sortie et les moyens de diffusion afin de conduire l'écoulement d'air en provence du trajet vers les moyens de diffusion.

10. Appareil selon la revendication 9, dans lequel:

les champs de flux des moyens magnétiques sont définis par plusieurs dispositifs à aimants allongés 46 dont chacun comprend un boîtier 48 formé à partir d'une matière non magnétique et contenant le long de celui-ci une série d'aimants permanents allongés 50 dans une relation d'espacement, d'alignement longitudinal et de pôles nord-sud alternés, des aimants consécutifs des boîtiers respectifs étant séparés par des corps non magnétiques 52,

les boîtiers 48 étant placés et orientés par rapport au site 44 afin de produire les lignes de force d'entrelacement.

11. Appareil selon la revendication 9, dans lequel les moyens d'induction de l'écoulement d'air ambiant 18 comprennent des moyens pour induire mécaniquement l'écoulement de l'air à travers le trajet d'écoulement.

12. Appareil selon la revendication 9, dans lequel les moyens d'induction de l'écoulement d'air ambiant 18 comprennent la sortie de trajet d'écoulement disposée au-dessus de l'entrée de trajet de l'écoulement, la lampe 61 chauffant l'air à l'intérieur du site de trajet de l'écoulement pour effectuer un écoulement de convection du trajet d'air à travers le trajet d'écoulement d'air.

13. Appareil selon la revendication 9, comprenant des moyens 116 pour recycler une partie de l'écoulement d'air ambiant en provenance de la sortie afin de la reconduire dans le trajet au niveau du site.

14. Appareil selon la revendication 9, dans lequel la chambre 32 a une configuration globale parallélépipédique, les champs de flux des moyens magnétiques étant formés par au moins un dispositif à aimants permanents monté dans la chambre.

15. Appareil selon la revendication 9, dans lequel la chambre 32 a une configuration globale cylindrique, le champ de flux des moyens magnétiques étant formé par au moins un dispositif 50 à aimants permanents allongé monté de façon à s'étendre longitudinalement par rapport à la chambre, la lampe 61 s'étendant longitudinalement par rapport au trajet étant sensiblement centrée à l'intérieur de la chambre.

16. Procédé de traitement d'un courant d'écoulement d'air ambiant pour convertir l'oxygène atmosphérique de l'air ambiant en gaz oxydant allotropique à oxygène gazeux ionisé qui reste dans le courant d'écoulement d'air, le procédé comprenant:

l'établissement d'un trajet d'écoulement de gaz 36 pour le courant d'écoulement d'air et d'un site 44 de formation des allotropes de l'oxygène ionisé dans le trajet, qui comprend des champs de flux magnétiques multiples d'une intensité fixe se distinguant par des relations multiples polaires magnétiques nord-sud ayant des orientations variables dont les lignes magnétiques de force en provenance de ceux-ci sont concentrées à l'intérieur du trajet au niveau du site et sont entrelacées en travers du trajet et le long de celui-ci, l'enveloppement des champs magnétiques en provenance d'une source à l'intérieur du trajet de l'écoulement au niveau du site par des émissions de longueur d'onde des ultraviolets en électrons-volts ayant des caractéristiques d'ionisation de l'oxygène,

le passage continu du courant d'écoulement d'air ambiant en provenance d'une source d'air ambiant à travers le trajet d'écoulement de gaz comprenant ledit site tout en utilisant le magnétisme des champs de flux pour concentrer l'oxygène atmosphérique dans le courant d'écoulement au niveau du site, et la protection contre un blocage de la source d'émission en électrons-volts,

la conversion au niveau du site de l'oxygène atmosphérique du courant d'écoulement qui y passe en ions allotropiques d'oxygène par photo-bombardement de ceux-ci en présence des champs de flux pour former le gaz oxydant du courant de l'écoulement d'air, tout en faisant passer simultanément l'azote atmosphérique du courant d'écoulement à travers le site sans changement chimique, et

le passage continu du courant d'écoulement, y compris l'oxygène atmosphérique converti sous forme gazeuse depuis le trajet d'écoulement de gaz.

17. Procédé de traitement de purification d'eau qui comprend les étapes de la revendication 16 et ensuite,

la diffusion du courant d'écoulement dans l'eau à traiter,

de sorte que les ions allotropiques résultant d'oxygène du courant d'écoulement sont attirés vers les molécules d'eau de l'eau à cause de leur nature électrique de dipoles et, de là, ont une relation d'oxydation avec la matière étrangère se trouvant dans l'eau, pour effectuer, en utilisant l'oxygène atmosphérique converti, la réduction de la tension de surface de l'eau et ainsi pour renforcer l'agglomération des solides colloïdaux qui s'y trouvent afin de les précipiter, oxyder la matière étrangère restant dans l'eau et stabiliser et tamponner le pH de l'eau.

## FIG-1

| ATMOSPHERIC OXYGEN O₂ NITROGEN N₂ | → | IONIZING MAGNETIC CONCENTRATION CELL | → | ATMOSPHERIC NITROGEN UNCHANGED |

IONIC OXYGEN ALLOTROPIC OXIDANT GAS

| ATMOSPHERIC NITROGEN UNCHANGED | ← | DIFFUSED INTO CONTAMINATED WATER |

PURIFIED WATER

## FIG-3

## FIG-4

EP 0 105 339 B1

Fig. 2.

EP 0 105 339 B1

FIG_9

FIG_10

FIG_11

FIG_12

FIG_13